# EUROPEAN PATENT APPLICATION

(11) **EP 1 422 280 A1**
(43) Date of publication of application: **26.05.2004**
(21) Application number: 02755720.6
(22) Date of filing: 31.07.2002
(51) Int. Cl.: C09K 3/00, C09D 127/12, C09D 201/00

(54) **STAINPROOFING AGENTS, COATING COMPOSITIONS CONTAINING THE SAME AND COATED ARTICLES**

(30) Priority: 31.07.2001 JP 2001232358; 10.08.2001 JP 2001244326
(71) Applicant: ASAHI GLASS COMPANY LTD., Tokyo 100-8405 (JP)
(72) Inventor: TAKAHASHI, Hideyuki Asahi Glass Company, Limited, Ichihara-shi, Chiba 290-8566 (JP); UCHINO, Bunji c/o Asahi Glass Company, Limited, Ichihara-shi, Chiba 290-8566 (JP)
(74) Representative: Müller-Boré & Partner Patentanwälte
(86) International application number: PCT/JP2002/007804
(87) International publication number: WO 2003/011998

(57) **Abstract**

The invention provides stain-proofing agents capable of forming coating films excellent in rain streak stain resistance and durability thereof, coating compositions comprising the stain-proofing agents, and articles coated therewith.

A stain-proofing agent comprising a polymer which contains at least one repeating unit having at least two hydroxyl groups, wherein the content (by mass) of the repeating unit is more than 10%. A stain-proofing agent comprising a polymer which contains at least two repeating units having hydroxymethyl groups, wherein the content (by mass) of the repeating unit is more than 30%. A coating composition comprising such a stain-proofing agent and a coating resin such as a fluororesin.

## Description

### TECHNICAL FIELD

The present invention relates to stain-proofing agents, coating compositions comprising the stain-proofing agents, and coated articles.

### BACKGROUND ART

Heretofore, articles made of metals, inorganic materials, plastics, wood materials, papers, leathers, fibers, etc., are subjected to surface coating for the purpose of protecting their surfaces or providing ornamentation and functionality, and various coating materials have been developed for such surface coating.

In recent years, rain streak stains of outdoor buildings have been regarded as problematic especially in urban areas, and it has been desired to develop coating materials to overcome such problems, and various methods have been studied.
(1) JP-A-10-130450 discloses an aqueous coating composition made of an aqueous dispersion containing a coating resin component. In such an aqueous coating composition, a coating resin component having 4%, 5% or 10% (by mass, the same applies hereinafter) of glycerol monomethacrylate having two hydroxyl groups copolymerized is used as a specific example.
(2) JP-A-2001-72928 discloses a stain-proofing type aqueous coating composition comprising (a) an emulsion of an organic synthetic resin, (b) a coupling agent and (c) a hydrophilicity-imparting organic compound having a group reactive with the coupling agent. As an example of the hydrophilicity-imparting organic compound (c), a polyvinyl alcohol constituted by repeating units each having one hydroxyl group, is specifically employed.
(3) JP-A-8-165442 discloses a coating composition comprising a film-forming resin, fine particles of a hydrophilic polymer and an organic solvent. The fine particles of the hydrophilic polymer in the coating composition have N-hydroxymethylacrylamide copolymerized as crosslinking moieties. However, the content (by mass, the same applies hereinafter unless otherwise specified) of repeating units of N-hydroxymethylacrylamide in the copolymer is 20% at the maximum.
(4) JP-A-11-293150 discloses a surface treating agent for an aqueous coating material, wherein a copolymer having N-hydroxymethylacrylamide copolymerized, is used as a crosslinking agent. The content of repeating units of N-hydroxymethylacrylamide in this copolymer as a crosslinking agent, is 30% at the maximum.

However, specific examples of the coating resin component in the above (1) and the polyvinyl alcohol in the above (2), are inadequate as stain-proofing agents to impart a stain-proofing property or a rain streak stain resistance to the surface of articles, and especially, with respect to the rain streak stain resistance, no practical performance can be realized. Further, the fine particles of the hydrophilic polymer in the above (3) and the copolymer as a crosslinking agent in the above (4), are inadequate as stain-proofing agents to impart a stain-proofing property, stain resistance or rain streak stain resistance to the surface of various articles, and especially with respect to the rain streak stain resistance, no practical performance can be realized.

The purpose of the present invention is to provide a stain-proofing agent capable of imparting an excellent stain-proofing property, stain resistance and rain streak stain resistance (hereinafter these may generally be referred to as stain resistance) to the surface of various articles. Another object of the present invention is to provide a coating composition capable of forming a coating film excellent in the stain resistance, and to provide a coated article having a coating film excellent in the stain resistance.

### DISCLOSURE OF THE INVENTION

(1) The present invention provides a stain-proofing agent comprising a polymer (hereinafter sometimes referred to as the polymer (1)) which contains at least one repeating unit (A1) having at least two hydroxyl groups and, if necessary, contains a repeating unit (B1) other than the repeating unit (A1), wherein the content (by mass) of the repeating unit (A1) is more than 10%.
(2) Further, the present invention provides a stain-proofing agent comprising a polymer (hereinafter sometimes referred to as the polymer (2)) which contains at least two repeating units (A2) having hydroxymethyl groups and, if necessary, contains a repeating unit (B2) other than the repeating units (A2), wherein the content (by mass) of the repeating units (A2) is more than 30%.
(3) Further, the present invention provides a coating composition comprising a coating resin and the above-mentioned stain-proofing agent.
(4) Still further, the present invention provides a coated article having a coating film formed by using the above-mentioned coating composition.

### BEST MODE FOR CARRYING OUT THE INVENTION

The stain-proofing agent of the present invention can be applied to coating materials of any form such as a solvent type coating material, an aqueous coating material, a powder coating material, etc. Particularly when it is applied to an aqueous coating material, it is excellent in the stain-proofing property, such being preferred. It is preferred that the stain-proofing agent of the present invention is dissolved or dispersed in water. Namely, for the stain-proofing agent of the present invention, it is preferred to use water as a solvent or a dispersing medium. The stain-proofing agent of the present invention can easily be mixed with an aqueous coating material and thus is excellent in the application to the aqueous coating material.

In the polymer (1) of the present invention, the repeating unit (A1) (hereinafter sometimes referred to as the unit (A1)) having at least two hydroxyl groups, can be introduced into the polymer by polymerizing a polymerizable monomer having at least two hydroxyl groups. Otherwise, the unit (A1) may be introduced into the polymer also by various modifying methods such that at least two hydroxyl groups are introduced to a polymer having reaction sites. Hereinafter, a polymerizable monomer which provides the unit (A1) will be described as a typical example.

Further, with respect to the specific chemical names in this specification, one identified as a (meth)acrylate means an acrylate or a methacrylate. Similarly, (meth)acrylic acid means acrylic acid or methacrylic acid, and (meth)acrylamide means acrylamide or methacrylamide.

As the polymerizable monomer which provides the unit (A1), the following polymerizable monomers may, for example, be mentioned.

CH₂=CHCOOR¹, CH₂=C(CH₃)COOR¹, CH₂=CHOCOR¹, CH₂=C(CH₃)OCOR¹, CH₂=CHOR¹, CH₂=C(CH₃)OR¹, CH₂=CHCH₂OR¹, CH₂=CHCH₂OCOR¹, CH₂=CHCONHR¹, CH₂=C(CH₃)CONHR¹, CH₂=CHCON(R¹)₂, CH₂=C(CH₃)CON(R¹)₂, CH₂=CHNHCOR¹, CH₂=C(CH₃)NHCOR¹, etc. Here, R¹ is an organic group having at least two hydroxyl groups. From the viewpoint of the stain resistance, R¹ is preferably an organic group having from 1 to 100 carbon atoms. More preferably, R¹ is an organic group having from 1 to 20 carbon atoms. In a case where two or more R¹ are contained, they may be the same or different. Further, R¹ may contain other functional group in addition to the hydroxyl groups or other atoms such as nitrogen, chlorine or fluorine atoms.

As a specific example of the polymerizable monomer which provides the unit (A1), an ester of a tri- or higher functional polyol compound or a saccharide with (meth)acrylic acid, or an amide of a di- or higher functional polyol compound having an amino group or a saccharide having an amino group, with (meth)acrylic acid, may be mentioned.

The tri- or higher functional polyol compound may, for example, be glycerol, diglycerol, triglycerol, tetraglycerol, pentaglycerol, hexaglycerol, pentaerythritol, 1,2,6-hexanetriol, 2-hydroxymethyl-2-methyl-1,3-propanediol or 2-ethyl-2-hydroxymethyl-1,3-propanediol.

The saccharide may, for example, be a monosaccharide such as glucose, mannose, galactose, gulose, fructose or D-ribose, a glucoside, galactoside or fructoside led from such a monosaccharide, or a dimmer, trimer or the like, thereof.

The di- or higher functional polyol compound having an amino group may, for example, be 3-amino-1,2-propanediol. The saccharide having an amino group may, for example, be D-glucosamine.

The unit (A1) may be of a single type, or may be a combination of two or more types. The larger the content (by mass) of the unit (A1), the better the stain resistance, and the content is usually more than 10%, preferably more than 30%.

In the polymer (2) of the present invention, the repeating units (A2) (hereinafter sometimes referred to as the units (A2)) having hydroxymethyl groups, can be introduced into the polymer by polymerizing a polymerizable monomer having a hydroxymethyl group. Otherwise, the units (A2) may be introduced into the polymer also by various modification methods such that hydroxymethyl groups are introduced into a polymer having reactive sites. Now, a polymerizable monomer which provides the units (A2) will be described as a typical example.

As the polymerizable monomer which provides the units (A2), the following polymerizable monomers may, for example, be mentioned.

CH₂=CHCOOR⁵, CH₂=C(CH₃)COOR⁵, CH₂=CHOCOR⁵, CH₂=C(CH₃)OCOR⁵, CH₂=CHCONHR⁵, CH₂=C(CH₃)CONHR⁵, CH₂=CHCON(R⁵)₂, CH₂=C(CH₃)CON(R⁵)₂, CH₂=CHNHCOR⁵, CH₂=C(CH₃)NHCOR⁵, (4-hydroxymethylcyclohexyl)methyl (meth)acrylate, etc.

Here, R⁵ is a hydroxymethyl group-containing group, and when two or more R⁵ are contained, they may be the same or different. Further, R⁵ may contain other functional group in addition to the hydroxymethyl groups, or other atoms such as nitrogen, chlorine or fluorine atoms. From the viewpoint of the stain resistance, R⁵ is usually preferably a hydroxymethyl group, and particularly preferred is a repeating unit having a structure of a hydroxymethyl group bonded to a nitrogen atom or an oxygen atom.

In the present invention, the hydroxymethyl groups in the units (A2) are preferably bonded to nitrogen atoms. The units (A2) are particularly preferably repeating units obtained from a monomer selected from the group consisting of N-hydroxymethylacrylamide, N-hydroxymethylmethacrylamide, N,N-bis(hydroxymethyl)acrylamide and N,N-bis(hydroxymethyl)methacrylamide.

The units (A2) may be of one type or a combination of two or more types. The content (by mass) of the units (A2) is more than 30%. The larger the content of the units (A2), the better the stain resistance. The content is preferably from 50 to 100%.

The polymer (1) of the present invention may contain a repeating unit (B1) (hereinafter sometimes referred to as the unit (B1)) other than the repeating unit (A1), as the case requires. It is preferred that at least one type of the unit (B1) is a repeating unit (b1) (hereinafter sometimes referred to as the unit (b1)) having a crosslinkable functional group, other than the unit (A1). Further, the unit (B1) may be a repeating unit (b2) (hereinafter sometimes referred to as the unit (b2)) other than the unit (A1) and other than the unit (b1). The unit (B1) may be a combination of the unit (b1) and the unit (b2).

Further, the polymer (2) of the present invention may contain a repeating unit (B2) (hereinafter sometimes referred to as the unit (B2)) other than the above unit (A2), as the case requires. At least one type of the unit (B2) is preferably a repeating unit (b3) (hereinafter sometimes referred to as the unit (b3)) having a crosslinkable functional group other than the unit (A2). Further, the unit (B2) may be a repeating unit (b4) (hereinafter sometimes referred to as the unit (b4)) other than the unit (A2) and other than the unit (b3). The unit (B2) may be a combination of the unit (b3) and the unit (b4).

The polymerizable monomer which provides the unit (b1) or the unit (b3), may be a monomer having a crosslinkable functional group which is commonly used for a crosslinking reaction. For example, as the polymerizable monomer which provides the unit (b1) or the unit (b3), a monomer having an aldehyde-type carbonyl group, a monomer having a ketone type carbonyl group, a monomer having a hydroxyl group, a monomer having a carboxyl group or its salt, a monomer having a sulfo group or its salt, a monomer having a phosphoric residual group or its salt, a monomer having an epoxy group, a monomer having an amino group or its salt, a monomer having an oxazoline residual group, a monomer having an amide group, a monomer having an alkoxy group or a monomer having a hydrolysable silyl group, may, for example, be mentioned.

The unit (b1) or the unit (b3) is preferably a repeating unit obtained from at least one monomer selected from the group consisting of a monomer having an aldehyde-type carbonyl group, a monomer having a ketone type carbonyl group and a monomer having an oxazoline residual group.

In this specification, carbonyl in the aldehyde-type carbonyl group and the ketone type carbonyl group, represents a ketone and an aldehyde, whereby an ester, amide and carboxyl are excluded.

The monomer having an aldehyde-type carbonyl group may, for example, be (meth)acrolein, crotonaldehyde, β-formylstyrene, β-formyl-α-methylstyrene, or a β-(meth)acryloyloxy-α,α-dialkylpropanal.

Specific examples of the β-(meth)acryloyloxy-α,α-dialkylpropanal include, for example, β-(meth)acryloyloxy-α,α-dimethylpropanal, β-(meth)acryloyloxy-α,α-diethylpropanal, β-(meth)acryloyloxy-α,α-dipropylpropanal, β-(meth)acryloyloxy-α-methyl-α-butylpropanal, β-(meth)acryloyloxy-α,α, and β-trimethylpropanal.

The monomer having a ketone type carbonyl group may, for example, be N-(1,1-dimethyl-3-oxobutyl) (meth)acrylamide, vinyl methyl ketone, vinyl ethyl ketone, vinyl propyl ketone, vinyl isopropyl ketone, vinyl butyl ketone, vinyl isobutyl ketone, vinyl tert-butyl ketone, vinyl phenyl ketone, vinyl benzyl ketone, divinyl ketone, or (1,1-dimethyl-3-oxobutyl) (meth)acrylate.

Further, the monomer having a ketone type carbonyl group may, for example, be a monomer having an active methylene radical moiety. Specifically, allyl acetoacetate, 2-acetoacetoxyethyl (meth)acrylate, 2-(acetoacetoxy)propyl (meth)acrylate, 3-(acetoacetoxy)propyl (meth)acrylate, 2-(acetoacetoxy)butyl (meth)acrylate, 3-(acetoacetoxy)butyl (meth)acrylate, or 4-(acetoacetoxy)butyl (meth)acrylate.

The monomer having a hydroxyl group may, for example, be vinylphenol, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, 4-hydroxycyclohexyl (meth)acrylate, (4-hydroxymethylcyclohexyl)methyl (meth)acrylate, neopentyl glycol mono (meth)acrylate, 3-chloro-2-hydroxypropyl (meth)acrylate, N-hydroxymethyl (meth)acrylamide, hydroxymethyl (meth)acrylate, or glycerol mono (meth)acrylate.

Further, a monomer having a polyoxyalkylene (hereinafter referred to as POA) chain and a terminal hydroxyl group, may also be mentioned.

For example, CH₂=CHOCH₂C₆H₁₀CH₂O(C₂H₄O)ₖH (wherein k is an integer of from 1 to 100, the same applies hereinafter), CH₂=CHOC₄H₈O(C₂H₄O)ₖH, CH₂=CHCOOC₂H₄O(C₂H₄O)ₖH, CH₂=C(CH₃)COOC₂H₄O(C₂H₄O)ₖH, CH₂=CHCOOC₂H₄O(C₂H₄O)ₘ(C₃H₆O)ₙH (wherein m is 0 or an integer of from 1 to 100, and n is an integer of from 1 to 100, provided that m+n is from 1 to 100, the same applies hereinafter), or CH₂=C(CH₃)COOC₂H₄O(C₂H₄O)ₘ(C₃H₆O)ₙH, may be mentioned.

As commercial products of the above monomer having a POA chain and a terminal hydroxyl group, PE-90, PE-200, PE-350, AE-400, PP-500, PP-800, PP-1000, AP-400, 50PEP-300, and 70PEP-350B (all manufactured by NOF Corporation) may, for example, be mentioned.

The monomer having a carboxyl group or its salt may, for example, be acrylic acid, methacrylic acid, vinyl acetic acid, crotonic acid, itaconic acid, maleic acid, maleic anhydride, fumaric acid, cinnamic acid or salts thereof.

The monomer having a sulfo group or its salt, may, for example, be vinyl sulfonic acid, (meth)allylsulfonic acid, styrene sulfonic acid, 2-hydroxyallyloxy-1-propane sulfonic acid, sulfoethoxy acrylate, sulfoethoxy methacrylate, 2-acrylamide-2-methylpropane sulfonic acid, or salts thereof.

The monomer having a phosphoric residual group or its salt, may, for example, be 2-acryloyloxyethyl phosphate, 2-methacryloyloxyethyl phosphate, or salts thereof.

The monomer having an epoxy group may, for example, be glycidyl (meth)acrylate, glycidyl cinnamate, glycidyl allyl ether, glycidyl vinyl ether, or 3,4-epoxy-1-butene.

The monomer having an amino group or its salt, may, for example, be 2-N-methylaminoethyl (meth)acrylate, 2-N-ethylaminoethyl (meth)acrylate, 3-amino-2-hydroxypropyl (meth)acrylate, allylamine, or salts thereof.

The monomer having an oxazoline residual group, may, for example, be 2-vinyl-2-oxazoline, 2-vinyl-4-methyl-2-oxazoline, 2-vinyl-5-methyl-2-oxazoline, 2-isopropenyl-2-oxazoline, or 2-isopropenyl-4-methyl-2-oxazoline.

The monomer having an amide group, may, for example, be (meth)acrylamide, N-vinylformamide, or N-vinylacetoamide.

The monomer having an alkoxy group, may, for example, be 2-methoxyethyl (meth)acrylate, 2-ethoxyethyl (meth)acrylate, N-methoxymethyl (meth)acrylamide, N,N-bis(methoxymethyl) (meth)acrylamide, N-ethoxymethyl (meth)acrylamide, N,N-bis(ethoxymethyl) (meth)acrylamide, N-propoxymethyl (meth)acrylamide, N,N-bis(propoxymethyl) (meth)acrylamide, N-butoxymethyl (meth)acrylamide, N,N-bis(butoxymethyl) (meth)acrylamide, or N-(2,2-dimethoxy-1-hydroxyethyl) (meth)acrylamide.

Further, a monomer having a POA chain and a terminal alkoxy group, may also be mentioned. For example, CH₂=CHOCH₂C₆H₁₀CH₂O(C₂H₄O)ₖCH₃ (wherein k is an integer of from 1 to 100, the same applies hereinafter), CH₂=CHOC₄H₈O(C₂H₄O)ₖCH₃, CH₂=CHCOOC₂H₄O(C₂H₄O)ₖCH₃, CH₂=C(CH₃)COOC₂H₄O(C₂H₄O)ₖCH₃, CH₂=CHCOOC₂H₄O(C₂H₄O)ₘ(C₃H₆O)ₙCH₃ (wherein m is 0 or an integer of from 1 to 100, and n is an integer of from 1 to 100, provided that m+n is from 1 to 100, the same applies hereinafter), or CH₂=C(CH₃)COOC₂H₄O(C₂H₄O)ₘ(C₃H₆O)ₙCH₃, may, for example, be mentioned.

As commercial products of the above monomer having a POA chain and a terminal alkoxy group, M-20G, M-40G, M-90G, M-230G, AM-90G (all manufactured by Shin-Nakamura Chemical Co., Ltd.), PME-100, PME-200, PME-400 (all manufactured by NOF Corporation) may, for example, be mentioned.

In the present invention, the polymerizable monomer which provides the unit (B1) or the unit (B2) is preferably a monomer having a POA chain and a terminal hydroxyl group, or a monomer having a POA chain and a terminal alkoxy group. The POA chain serves to disperse molecules of the stain-proofing agent from one another. Accordingly, it is preferred to use such a monomer, whereby the molecular weight of the stain-proofing agent will not increase during the storage, and the composition containing such a stain-proofing agent will be free from viscosity increase or gelation.

The monomer having a hydrolysable silyl group may, for example, be 3-(meth)acryloyloxypropyltrimethoxysilane, 3-(meth)acryloyloxypropyltriethoxysilane, 2-(meth)acryloyloxyethyltrimethoxysilane, 2-(meth)acryloyloxyethyltriethoxysilane, vinyltrimethoxysilane, vinyl triethoxysilane, p-vinylphenyltrimethoxysilane, p-vinylphenyltriethoxysilane, 3-trimethoxysilylpropyl vinyl ether, or 3-methyldimethoxysilylpropyl vinyl ether.

The units (b1) may be the same or different. The content (by mass) of the unit (b1) is preferably at least 0.01% and less than 90%. The content (by mass) of the unit (b3) is preferably at least 0.01% and less than 70%. In either case, the more preferred is from 0.1 to 50%. Within this range, the storage stability, the stain resistance and the durability thereof are good when incorporated to a coating material.

The polymerizable monomer which provides the unit (b2), may, for example, be a hydrocarbon type olefin, a vinyl ether, an isopropenyl ether, an allyl ether, a vinyl ester, an allyl ester, an alkyl (meth)acrylate, an aromatic vinyl compound, a chloroolefin, a conjugated diene or a polyfunctional polymerizable double bond-containing compound.

The hydrocarbon type olefin may, for example, be ethylene, propylene or isobutylene.

The vinyl ether may, for example, be a chain alkyl vinyl ether such as methyl vinyl ether, ethyl vinyl ether, n-propyl vinyl ether, isopropyl vinyl ether, n-butyl vinyl ether, tert-butyl vinyl ether, n-pentyl vinyl ether, n-hexyl vinyl ether, isohexyl vinyl ether, n-octyl vinyl ether, or 4-methyl-1-pentyl vinyl ether, an alicyclic alkyl vinyl ether such as cyclopentyl vinyl ether or cyclohexyl vinyl ether, or an aromatic group-containing vinyl ether such as phenyl vinyl ether or benzyl vinyl ether.

The isopropenyl ether may, for example, be methyl isopropenyl ether, ethyl isopropenyl ether, n-propyl isopropenyl ether or n-butyl isopropenyl ether.

The allyl ether may, for example, be ethyl allyl ether or cyclohexyl allyl ether.

The vinyl ester may, for example, be vinyl acetate, vinyl propionate, vinyl pivalate, vinyl octanoate, vinyl versatate, or vinyl octadecanoate.

The allyl ester may, for example, be allyl acetate or allyl propionate.

The (meth)acrylate may, for example, be methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, n-pentyl (meth)acrylate, 3-methylbutyl (meth)acrylate, n-hexyl (meth)acrylate, 2-ethyl-n-hexyl (meth)acrylate, n-octyl (meth)acrylate or cyclohexyl (meth)acrylate.

The aromatic vinyl compound may, for example, be styrene, α-methylstyrene, 2-methylstyrene, 3-methylstyrene, 4-methylstyrene, 4-ethylstyrene, 4-tert-butylstyrene, 3,4-dimethylstyrene, 4-methoxystyrene, 4-ethoxystyrene, 2-chlorostyrene, 3-chlorostyrene, 4-chlorostyrene, 2,4-dichlorostyrene, 2,6-dichlorostyrene, 4-chloro-3-methylstyrene, divinylbenzene, 1-vinylnaphthalene, 2-vinylpyridine or 4-vinylpyridine.

The chloroolefin may, for example, be vinyl chloride, vinylidene chloride, isopropenyl chloride or allyl chloride.

The conjugated diene may, for example, be 1,3-butadiene, isoprene, chloroprene, or 2,3-dimethyl-1,3-butadiene.

The polyfunctional polymerizable double bond-containing compound may, for example, be divinylbenzene, divinyl ether, allyl (meth)acrylate, diallyl isophthalate, diallyl terephthalate, triallyl trimellitate, ethylene glycol di(meth)acrylate, diethylene glycol di(meth)acrylate, triethylene glycol di(meth)acrylate, tetraethylene glycol di(meth)acrylate, 1,3-butylene glycol (meth)diacrylate, 1,6-hexanediol di(meth)acrylate, glycerol tri(meth)acrylate, trimethylolpropane tri(meth)acrylate, or pentaerythritol tetra(meth)acrylate.

The units (b2) may be the same or different. The content (by mass) of the unit (b2) is preferably less than 89.99%, in consideration of the stain resistance. It is more preferably from 0 to 30%. The content (by mass) of the unit (b4) is preferably less than 69.99%. In consideration of the stain resistance, it is particularly preferably from 0 to 50%.

The polymer constituting the stain-proofing agent in the present invention contains the unit (A1) or at least two units (A2). In the case where it contains the unit (A1), its molecular weight is preferably from 160 to 1,000,000, more preferably from 320 to 100,000, by number average molecular weight. When the number average molecular weight is within this range, the stain resistance will be better. Whereas, in the case where it contains the units (A2), its number average molecular weight is preferably from 210 to 1,000,000, more preferably from 1,000 to 100,000. If the number average molecular weight is within this range, the rain streak stain resistance will be better.

In the present invention, the glass transition temperature (T_{g}) of the stain-proofing agent is preferably at least 40°C, particularly preferably at least 50°C. When T_{g} is at least 40°C, the stain resistance in summer time is good, particularly, the stain resistance is good in a case where in summer time, the coating is carried out and outdoor exposure is initiated.

The stain-proofing agent in the present invention can be prepared by the following method. For example, it is a method wherein the above-mentioned monomer which provides the unit (A1) is, if necessary together with the monomer which provides the unit (B1), dissolved in a solvent and heated, and after adding a polymerization initiator, reacted. The same method may be employed also with respect to the monomer which provides the unit (A2).

As the solvent in the above preparation method, water or a water-soluble solvent is preferred. For example, water, methanol, ethanol, 1-propanol, 2-propanol, n-butyl alcohol, 2-methyl-1-propanol, ethylene glycol, propylene glycol, 1,3-butanediol, glycerol, diethylene glycol, dipropylene glycol, 2-methoxyethanol, 2-ethoxyethanol, 2-butoxyethanol, 2-ethoxyethyl acetate, 2-(2-methoxyethoxy)ethanol, methyl acetate, ethyl acetate, 2,2'-dichlorodiethyl ether, chloropropanol, acetone, methyl ethyl ketone, 1,4-dioxane, dimethylformamide, formamide or acetonitrile, may be mentioned. These solvents may be used alone or in combination as a mixture of two or more of them. From the viewpoint of the polymerization stability and efficiency in replacement of the solvent, methanol or acetone is preferred.

As the polymerization initiator, a known organic peroxide, inorganic peroxide or azo compound may, for example, be mentioned. An organic peroxide or inorganic peroxide may be combined with a reducing agent to be used as a redox catalyst. These catalysts may be used alone or in combination as a mixture of two or more of them.

The organic peroxide may, for example, be benzoyl peroxide, lauroyl peroxide, isobutyryl peroxide, tert-butyl hydroperoxide, or tert-butyl-α-cumyl peroxide.

The inorganic peroxide may, for example, be ammonium persulfate, sodium persulfate, potassium persulfate, hydrogen peroxide or a percarbonate.

The azo compound may, for example, be 2,2'-azobisisobutylonitrile, 1,1'-azobis(cyclohexane-1'-carbonitrile), 2,2'-azobis(2,4-dimethylvaleronitrile), 2,2'-azobis(4-methoxy-2,4-dimethylvaleronitrile), dimethyl 2,2'-azobisisobutyrate, or 2,2'-azobis(2-amidinopropane) dihydrochloride.

Further, in order to adjust the molecular weight, a mercaptan or an alkyl halide may, for example, be used as a known chain transfer agent. These chain transfer agents may be used alone or in combination as a mixture of two or more of them.

The mercaptan may, for example, be n-butyl mercaptan, n-dodecyl mercaptan, t-butyl mercaptan, ethyl thioglycolate, or 2-ethylhexyl thioglycolate. The alkyl halide may, for example, be chloroform, carbon tetrachloride or carbon tetrabromide.

The octane removal work calculated from the contact angle of octane in water, of a coating film formed from the stain-proofing agent obtained as described above, is preferably less than 3.0×10⁻² J/m². The octane removal work can be obtained by measuring the contact angle of octane to the above coating film in water.

The octane removal work (W_{A}') can be represented by the following formula.

W_{A}'=γ_{SW}+γ_{WO}-γ_{SO} (wherein γ_{SW} is the interfacial tension (J/m²) between the coating film surface and water, γ_{WO} is the interfacial tension (J/m²) between water and octane, and γ_{SO} is the interfacial tension (J/m²) between the coating film surface and octane.)

If the Young's formula [γ_{SW}=γ_{SO}+γ_{WO}=cosθ (wherein θ is the contact angle of octane to the coating film in water)] is substituted for the above formula, and using the extended Fowkes formula, if an attention is drawn to the fact that variance components of the surface tensions of water and octane are equal, the following formula will be led.

W_{A}'=C(1+cosθ) (wherein C is the polarity component of the surface tension of water, and C=0.051 (J/m²).)

θ is variable from 0 to 180°. Accordingly, W_{A}' varies within the range of from 0 to 10.2×10⁻² (J/m²). This means that as W_{A}' is small, the energy to remove octane from the coating film surface in water may be small. On the other hand, in substances which cause stains, an oily substance is contained in a large amount, and it is assumed that the coating film surface from which an oily substance such as octane is readily removed in water, is a coating film surface from which an oily substance can easily be washed off by rain or the like and a coating film surface which is excellent in the stain resistance. To exhibit the stain resistance, the octane removal work in water is preferably less than 3.0×10⁻² J/m², more preferably less than 2.0×10⁻² J/m².

As the coating resin, known various synthetic resins may be used without any particular restrictions. Specific examples include, for example, a fluororesin, an acryl resin, a silicone-modified acryl resin, a urethane resin, a melamine resin, a silicone resin, an epoxy resin and a polyester resin. Synthetic resins may be used alone or in combination as a mixture of two or more of them. It is particularly preferred to employ a fluororesin excellent in weather resistance and chemical resistance alone or as the main component.

As to the form of the above synthetic resin as the coating resin, any form may be used such as a solvent type, an aqueous type or a powder type. In the present invention, an aqueous type coating resin is preferred as the coating resin.

A fluororesin may, for example, be a polymer of a fluoromonomer or a copolymer of a fluoromonomer with a monomer other than a fluoromonomer.

The fluoromonomer may, for example, be a fluoroolefin or a monomer having a polyfluoroalkyl group. Such fluoromonomers may be used alone or in combination as a mixture of two or more of them.

The fluoroolefin may, for example, be vinyl fluoride, vinylidene fluoride, trifluoroethylene, chlorotrifluoroethylene, tetrafluoroethylene, pentafluoropropylene, or hexafluoropropylene.

The monomer having a polyfluoroalkyl group may, for example, be, CH₂=CR²COOR³R^{f}, CH₂=CR²COO(CH₂)ₙNR⁴SO₂R^{f}, CH₂=CR²COO(CH₂)ₙNR⁴COR^{f} or CH₂=CR²COOCH₂CH(OH)(CH₂)ₙR^{f}. Here, n is an integer of from 1 to 10, R^{f} is a polyfluoroalkyl group having from 1 to 18 carbon atoms, R² is a hydrogen atom or a methyl group, R³ is a bivalent organic group having from 1 to 6 carbon atoms, and R⁴ is a hydrogen atom or a monovalent organic group having from 1 to 6 carbon atoms.

R^{f} may be linear or branched or may contain an etheric oxygen atom. Specific examples of R^{f} include, for example, CF₃, CF₃CF₂, H(CF₂)₂, CF₃(CF₂)₂, CF₃(CF₂)₃, H(CF₂)₄, CF₃(CF₂)₄, CF₃(CF₂)₅, CF₃(CF₂)₂OCF(CF₃), H(CF₂)₆, CF₃(CF₂)₆, CF₃(CF₂)₇, H(CF₂)₈, CF₃(CF₂)₈, CF₃(CF₂)₉, CF₃CF(CF₃)(CF₂)₆, CF₃(CF₂)₁₀, H(CF₂)₁₀, CF₃(CF₂)₁₁, H(CF₂)₁₄, CF₃(CF₂)₁₅ and CF₃(CF₂)₁₇.

Specific examples of R³ include, for example, CH₂, CH₂CH₂, CH(CH₃), CH₂CH₂CH₂, C(CH₃)₂, CH(CH₂CH₃), CH₂CH₂CH₂CH₂, CH(CH₂CH₂CH₃), CH₂(CH₂)₃CH₂ and CH(CH₂CH(CH₃)₂).

Specific examples of R⁴ include, for example, a hydrogen atom, CH₃, CH₃CH₂, CH₃CH₂CH₂ and CH₃CH₂CH₂CH₂.

A fluoroolefin is particularly preferred, since it is excellent in durability.

As the monomer other than a fluoromonomer, a monomer copolymerizable with the fluoromonomer may be employed. Specific examples include, for example, a hydrocarbon type olefin, a vinyl ether, an isopropenyl ether, an allyl ether, a vinyl ester, an allyl ester, an alkyl (meth)acrylate, an aromatic vinyl compound, a chloroolefin, and a conjugated diene. Further, a compound having a polyfunctional polymerizable double bond, or a monomer having a functional group, may also be mentioned. These monomers may be used alone or in combination as a mixture of two or more of them.

The hydrocarbon type olefin may, for example, be ethylene, propylene or isobutylene.

The vinyl ether may, for example, be a linear alkyl vinyl ether such as methyl vinyl ether, ethyl vinyl ether, n-propyl vinyl ether, isopropyl vinyl ether, n-butyl vinyl ether, tert-butyl vinyl ether, n-pentyl vinyl ether, n-hexyl vinyl ether, isohexyl vinyl ether, n-octyl vinyl ether, or 4-methyl-1-pentyl vinyl ether, a cycloalkyl vinyl ether such as cyclopentyl vinyl ether or cyclohexyl vinyl ether, or an aromatic group-containing vinyl ether such as phenyl vinyl ether or benzyl vinyl ether.

The isopropenyl ether may, for example, be methyl isopropenyl ether, ethyl isopropenyl ether, n-propyl isopropenyl ether or n-butyl isopropenyl ether.

The allyl ether may, for example, be ethyl allyl ether or cyclohexyl allyl ether.

The vinyl ester may, for example, be vinyl acetate, vinyl propionate, vinyl pivalate, vinyl octanoate, vinyl versatate or vinyl octadecanoate.

The allyl ester may, for example, be allyl acetate or allyl propionate.

The (meth)acrylate may, for example, be methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, n-pentyl (meth)acrylate, 3-methylbutyl (meth)acrylate, n-hexyl (meth)acrylate, 2-ethyl-n-hexyl (meth)acrylate, n-octyl (meth)acrylate or cyclohexyl (meth)acrylate.

The aromatic vinyl compound may, for example, be styrene, α-methylstyrene, 2-methylstyrene, 3-methylstyrene, 4-methylstyrene, 4-ethylstyrene, 4-tert-butylstyrene, 3,4-dimethylstyrene, 4-methoxystyrene, 4-ethoxystyrene, 2-chlorostyrene, 3-chlorostyrene, 4-chlorostyrene, 2,4-dichlorostyrene, 2,6-dichlorostyrene, 4-chloro-3-methylstyrene, divinylbenzene, 1-vinylnaphthalene, 2-vinylpyridine or 4-vinylpyridine.

The chloroolefin may, for example, be vinyl chloride, vinylidene chloride, isopropenyl chloride or allyl chloride.

The conjugated diene may, for example, be 1,3-butadiene, isoprene, chloroprene or 2,3-dimethyl-1,3-butadiene.

The compound having a polyfunctional polymerizable double bond may, for example, be divinylbenzene, divinyl ether, allyl (meth)acrylate, diallyl isophthalate, diallyl terephthalate, triallyl trimellitate, ethylene glycol di(meth)acrylate, diethylene glycol di(meth)acrylate, triethylene glycol di(meth)acrylate, tetraethylene glycol di(meth)acrylate, 1,3-butylene glycol (meth)diacrylate, 1,6-hexanediol di(meth)acrylate, glycerol tri(meth)acrylate, trimethylol propane tri(meth)acrylate or pentaerythritol tetra(meth)acrylate.

The monomer having a functional group may, for example, be a monomer having a hydroxymethyl group, a monomer having an aldehyde type carbonyl group, a monomer having a ketone type carbonyl group, a monomer having a carboxyl group or its salt, a monomer having an epoxy group, a monomer having an amino group or its salt, a monomer having an oxazoline residual group, a monomer having an amino group, a monomer having an alkoxy group, a monomer having a hydrolysable silyl group, a monomer having a polyoxyalkylene chain (hereinafter referred to as a monomer having a POA chain), a monomer having a hydroxyl group, a monomer having a sulfo group or its salt, a monomer having a phosphoric acid residual group or its salt, a monomer having a zwitter ion, or a monomer having a cyano group.

The monomer having a hydroxymethyl group may, for example, be N-hydroxymethyl acrylamide, N-hydroxymethyl methacrylamide, N,N-bis(hydroxymethyl) acrylamide, N,N-bis(hydroxymethyl) methacrylamide, hydroxymethyl acrylate, hydroxymethyl methacrylate or (4-hydroxymethylcyclohexyl)methyl (meth)acrylate.

The monomer having an aldehyde type carbonyl group may, for example, be (meth)acrolein, crotonaldehyde, β-formylstyrene, β-formyl-α-methylstyrene or a β-(meth)acryloyloxy-α,α-dialkylpropanal. Specific examples of the β-(meth)acryloyloxy-α,α-dialkylpropanal include, for example, β-(meth)acryloyloxy-α,α-dimethylpropanal, β-(meth)acryloyloxy-α,α-diethylpropanal, β-(meth)acryloyloxy-α,α-dipropylpropanal, β-(meth)acryloyloxy-α-methyl-α-butylpropanal and β-(meth)acryloyloxy-α,α,β-trimethylpropanal.

The monomer having a ketone type carbonyl group may, for example, be N-(1,1-dimethyl-3-oxobutyl) (meth)acrylamide, vinyl methyl ketone, vinyl ethyl ketone, vinyl propyl ketone, vinyl isopropyl ketone, vinyl butyl ketone, vinyl isobutyl ketone, vinyl tert-butyl ketone, vinyl phenyl ketone, vinyl benzyl ketone, divinyl ketone or (1,1-dimethyl-3-oxobutyl) (meth)acrylate.

Further, the monomer having a ketone type carbonyl group may be a monomer having an active methylene moiety. Specifically, it may, for example, be allyl acetoacetate, 2-acetoacetoxyethyl (meth)acrylate, 2-(acetoacetoxy)propyl (meth)acrylate, 3-(acetoacetoxy)propyl (meth)acrylate, 2-(acetoacetoxy)butyl (meth)acrylate, 3-(acetoacetoxy)butyl (meth)acrylate or 4-(acetoacetoxy)butyl (meth)acrylate.

The monomer having a carboxyl group or its salt, may, for example, be acrylic acid, methacrylic acid, vinyl acetic acid, crotonic acid, itaconic acid, maleic acid, maleic anhydride, fumaric acid, cinnamic acid or salts thereof.

The monomer having an epoxy group may, for example, be glycidyl (meth)acrylate, glycidyl cinnamate, glycidyl allyl ether, glycidyl vinyl ether or 3,4-epoxy-1-butene.

The monomer having an amino group or its salt may, for example, be 2-N-methylaminoethyl (meth)acrylate, 2-N-ethylaminoethyl (meth)acrylate, 3-amino-2-hydroxypropyl (meth)acrylate or allylamine, or salts thereof.

The monomer having an oxazoline residual group may, for example, be 2-vinyl-2-oxazoline, 2-vinyl-4-methyl-2-oxazoline, 2-vinyl-5-methyl-2-oxazoline, 2-isopropenyl-2-oxazoline or 2-isopropenyl-4-methyl-2-oxazoline.

The monomer having an amide group may, for example, be (meth)acrylamide, N-vinylformamide or N-vinylacetamide.

The monomer having an alkoxy group may, for example, be 2-methoxyethyl (meth)acrylate, 2-ethoxyethyl (meth)acrylate, N-methoxymethyl (meth)acrylamide, N,N-bis(methoxymethyl) (meth)acrylamide, N-ethoxymethyl (meth)acrylamide, N,N-bis(ethoxymethyl) (meth)acrylamide, N-propoxymethyl (meth)acrylamide, N,N-bis(propoxymethyl) (meth)acrylamide, N-butoxymethyl (meth)acrylamide, N,N-bis(butoxymethyl) (meth)acrylamide or N-(2,2-dimethoxy-1-hydroxyethyl) (meth)acrylamide.

Further, the monomer having an alkoxy group may be a monomer having a terminal alkoxy group and a POA chain. For example, it may be CH₂=CHOCH₂C₆H₁₀CH₂O(C₂H₄O)ₖCH₃ (wherein k is an integer of from 1 to 100, the same applies hereinafter), CH₂=CHOC₄H₈O(C₂H₄O)ₖCH₃, CH₂=CHCOOC₂H₄O(C₂H₄O)ₖCH₃, CH₂=C(CH₃)COOC₂H₄O(C₂H₄O)ₖCH₃, CH₂=CHCOOC₂H₄O(C₂H₄O)ₘ(C₃H₆O)ₙCH₃ (wherein m is 0 or an integer of from 1 to 100, and n is an integer of from 1 to 100, provided that m+n is from 1 to 100, the same applies hereinafter), or

CH₂=C(CH₃)COOC₂H₄O(C₂H₄O)ₘ(C₃H₆O)ₙCH₃.

The monomer having a hydrolysable silyl group may, for example, be 3-(meth)acryloyloxypropyltrimethoxysilane, 3-(meth)acryloyloxypropyltriethoxysilane, 2-(meth)acryloyloxyethyltrimethoxysilane, 2-(meth)acryloyloxyethyltriethoxysilane, vinyltrimethoxysilane, vinyltriethoxysilane, p-vinylphenyltrimethoxysilane, p-vinylphenyltriethoxysilane, 3-trimethoxysilylpropyl vinyl ether or 3-methyldimethoxysilylpropyl vinyl ether.

As commercial products of the monomer having a POA chain, M-20G, M-40G, M-90G, M-230G (all manufactured by Shin-Nakamura Chemical Co., Ltd.), PE-90, PE-200, PE-350, AE-400, PP-500, PP-800, PP-1000, AP-400, 50PEP-300, 70PEP-350B, PME-100, PME-200 and PME-400 (all manufactured by NOF Corporation) may, for example, be mentioned.

The monomer having a hydroxyl group may, for example, be vinylphenol, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, 4-hydroxycyclohexyl (meth)acrylate, neopentylglycol mono(meth)acrylate, glycerol mono(meth)acrylate, 2,2-bis(hydroxymethyl)-3-hydroxypropyl (meth)acrylate, N-hydroxymethyl (meth)acrylamide, N,N-bis(hydroxymethyl) (meth)acrylamide, hydroxymethyl (meth)acrylate, 4-hydroxybutyl vinyl ether, or 4-(hydroxymethyl)cyclohexylmethyl vinyl ether.

The monomer having a sulfo group or its salt may, for example, be vinyl sulfonic acid, (meth)allyl sulfonic acid, styrene sulfonic acid, 2-hydroxyallyloxy-1-propane sulfonic acid, sulfoethoxy acrylate, sulfoethoxy methacrylate, 2-acrylamide-2-methylpropane sulfonic acid, or salts thereof.

The monomer having a phosphoric acid residual group or its salt may, for example, be 2-acryloyloxyethyl phosphate, 2-methacryloyloxyethyl phosphate, or salts thereof.

The monomer having a zwitter ion may be a phosphorylcholine group-containing (meth)acrylate.

The monomer having a cyano group may, for example, be (meth)acrylonitrile, crotononitrile, 2-cyanoethyl (meth)acrylate, 2-cyanopropyl (meth)acrylate, 3-cyanopropyl (meth)acrylate or nitrile cinnamate.

By copolymerizing a monomer other than the fluoromonomer, it may be possible to obtain an effect for improving the dispersibility of a pigment, improving the film forming property of a coating film or an adhesive property to the undercoat, improving the hardness, improving the strength, improving the elongation or improving the gloss value.

In the copolymerization of the fluoromonomer with the monomer other than the fluoromonomer, the copolymerization ratio of the fluoromonomer is preferably from 30 to 90 mol%, more preferably from 40 to 80 mol%, taking the durability, etc. into consideration.

The copolymerization ratio of the monomer other than the fluoromonomer is preferably from 10 to 70 mol%, more preferably from 20 to 60 mol%. In a case where a monomer having a functional group is copolymerized, the copolymerization ratio of the monomer having a functional group is preferably from 1 to 20 mol%, more preferably from 2 to 15 mol%.

In the present invention, as the coating resin, a mixture of the fluororesin and another resin, may be used. In such a case, as another resin, an acrylic resin is preferred, since it is excellent in the durability of the rain streak stain resistance. The mixing ratio (by mass) of the fluororesin/the acrylic resin is preferably from 100/0 to 20/80, more preferably from 100/0 to 50/50.

In the coating composition of the present invention, as a water-base coating resin, an emulsion resin is preferred. The emulsion resin may preferably be, for example, a fluorinated emulsion resin, a mixture of a fluorinated emulsion resin with an acrylic emulsion resin, or a resin having an acrylic monomer subjected to seed polymerization in the presence of seed particles of the fluorinated emulsion resin.

The amount of the stain-proofing agent incorporated in the coating composition of the present invention is preferably from 0.1 to 100 parts by mass per 100 parts by mass of the coating resin. If it is within this range, the stain resistance and the weather resistance will be good. It is preferably from 0.5 to 50 parts by mass, more preferably from 1 to 30 parts by mass.

As the curing agent reactive with the crosslinkable functional group of the unit (b1), known various curing agents may be used. For example, an amino resin, a polyisocyanate compound, a compound having two or more hydrazide groups, a polycarbodiimide compound, a compound having two or more epoxy groups, a compound having two or more oxazoline residual groups, a compound having two or more aziridine residual groups, polyvalent metals, a compound having two or more amino groups, a polyketimine, a compound having two or more carboxyl groups, an acid anhydride, or a compound having two or more mercapto groups, may be mentioned. These curing agents may be used alone or in combination as a mixture of two or more of them.

The amino resin may, for example, be a compound having some or all of amino groups of e.g. a melamine compound, a guanamine compound or a urea compound hydroxymethylated, or a compound having some or all of hydroxyl groups of such a hydroxymethylated compound etherified with e.g. methanol, ethanol, n-butyl alcohol or 2-methyl-1-propanol, such as hexamethoxymethylmelamine.

The polyisocyanate compound may, for example, be a polyisocyanate compound such as hexamethylene diisocyanate or isophorone diisocyanate, a silane isocyanate compound such as silane methyl triisocyanate, and/or a condensate or polymer thereof, or an aqueous dispersion type thereof, or a blocked polyisocyanate compound having an isocyanate group thereof blocked with a blocking agent such as phenol. Particularly preferred is one of a non-yellowing type.

The compound having two or more hydrazide groups, may, for example, be a dihydrazide, a polyfunctional hydrazide or a polyfunctional semicarbazide.

The dihydrazide may, for example, be carbohydrazide, oxalic dihydrazide, malonic dihydrazide, succinic dihydrazide, glutaric dihydrazide, adipic dihydrazide, heptanedioic dihydrazide, octanedioic dihydrazide, nonanedioic dihydrazide, dodecanedioic dihydrazide, hexadecanedioic dihydrazide, phthalic dihydrazide, isophthalic dihydrazide, terephthalic dihydrazide, 1,4-naphthoic dihydrazide, 2,6-naphthoic dihydrazide, 4,4'-bisbenzenedihydrazide, 2,6-pyridinedihydrazide, 1,4-cyclohexane dihydrazide, tartaric dihydrazide, malic dihydrazide, iminodiacetic dihydrazide or itaconic dihydrazide.

The polyfunctional hydrazide may, for example, be ethylenediaminetetraacetic tetrahydrazide, citric trihydrazide, cyclohexanetricarboxylic trihydrazide, trimellitic trihydrazide, pyromellitic trihydrazide, pyromellitic tetrahydrazide, 1,4,5,8-naphthoic tetrahydrazide, or a reaction product of hydrazine with an oligomer containing an alkyloxy carbonyl group, such as an oligomer of an alkyl (meth)acrylate.

The polyfunctional semicarbazide may, for example, be a reaction product of hydrazine with a polyisocyanate.

The polycarbodiimide compound is obtainable by a known de-carbon dioxide condensation reaction of an organic diisocyanate. Here, a phosphoric compound such as trimethyl phosphate or triethyl phosphate may be employed as a known catalyst. Further, by using a mixture of an organic diisocyanate and a hydroxyl group-containing polyethylene glycol, a nonionic hydrophilic polycarbodiimide compound can be obtained. From the viewpoint of the dispersibility in water, the stability, a nonionic hydrophilic polycarbodiimide compound is preferred.

The compound having two or more epoxy groups may, for example, be a glycerol polyglycidyl ether compound.

The compound having two or more oxazoline residual groups may, for example, be a copolymer of a polymerizable monomer such as 2-vinyl-2-oxazoline, 2-vinyl-4-methyl-2-oxazoline, 2-vinyl-5-methyl-2-oxazoline, 2-isopropenyl-2-oxazoline or 2-isopropenyl-4-methyl-2-oxazoline.

The compound having two or more aziridine residual groups may, for example, be 2,2-bishydroxymethylbutanol-tris[3-(1-aziridinyl)propionate], or 2,2,2-trishydroxymethylethanol-tris[3-(1-aziridinyl)propionate].

The polyvalent metals may, for example, be zinc chloride, ammonium zinc chloride, zinc nitrate, zinc carbonate, zinc sulfate, chromic acid and its salt, dichromic acid and its salt, diisopropoxytitanium bisacetylacetone, aluminum sulfate, triacetylalminum, zirconium nitrate, zirconium acetate, ammonium zirconium carbonate, potassium zirconium fluoride, or ammonium zirconium fluoride.

The compound having two or more amino groups may, for example, be an aliphatic polyamine, an alicyclic polyamine, an aromatic polyamine or a heterocyclic polyamine.

The aliphatic polyamine may, for example, be ethylenediamine, 1,2-propylenediamine, 1,4-butylenediamine, hexamethylenediamine, diethylenetriamine, triethylenetetramine, tetraethylenepentamine, dimethylaminopropylamine, diethylaminopropylamine or dicyanediamine.

The alicyclic polyamine may, for example be 1,3-bis(aminomethyl)cyclohexane, isophoronediamine, N-3-aminopropylcyclohexylamine, 1,4-diaminocyclohexane, bis(aminocyclohexyl)methane, bis(3-methyl-4-aminocyclohexyl)methane or 1,4-bis(ethylamino)cyclohexane.

The aromatic polyamine may, for example, be m-xylenediamine, p-xylenediamine, 4-(1-aminoethyl)aniline, methphenylenediamine or diaminodiphenylmethane.

The heterocyclic polyamine may, for example, be N-aminoethylpiperazine or 1,4-bis(3-aminopropyl)piperazine.

The compound having two or more carboxyl groups may, for example, be an aliphatic dicarboxylic acid, an alicyclic dicarboxylic acid, an aromatic carboxylic acid or a tri- or higher functional polycarboxylic acid.

The aliphatic dicarboxylic acid may, for example, be oxalic acid, malonic acid, succinic acid, glutaric acid, adipic acid, suberic acid, sebacic acid, tartaric acid, malic acid or iminodiacetic acid.

The alicyclic dicarboxylic acid may, for example, be maleic acid, fumaric acid or itaconic acid.

The aromatic carboxylic acid may, for example, be phthalic acid, terephthalic acid, 1,4-naphthalene dicarboxylic acid or 2,6-naphthalene dicarboxylic acid.

The tri- or higher functional polycarboxylic acid may, for example, be citric acid, 1,3,5-cyclohexane tricarboxylic acid, ethylenediaminetetraacetic acid, trimellitic acid, pyromellitic acid or 3,3',4,4'-benzophenonetetracarboxylic acid.

The acid anhydride may, for example, be acetic anhydride, propionic anhydride, lactic anhydride, citraconic anhydride, maleic anhydride, phthalic anhydride, trimellitic anhydride, pyromellitic anhydride or 3,3',4,4'-benzophenonetetracarboxylic dianhydride.

The compound having two or more mercapto groups may, for example, be an aliphatic dimercapto compound or an aromatic dimercapto compound.

The aliphatic dimercapto compound may, for example, be an aliphatic dimercapto compound such as 1,6-dimercaptohexane, dimercaptodiethyl ether, triglycol dimercaptan or bis-(2-mercaptoethyl) sulfide.

The aromatic dimercapto compound may, for example, be 3,4-dimercaptotoluene, bis(4-mercaptophenyl)sulfide, 2,5-dimercapto-1,3,4-thiadiazole, 4-tert-butyl-1,2-benzenedithiol, 2-di-n-butylamino-4,6-dimercapto-1,3,5-triazine, or 2,4,6-trimercapto-1,3,5-triazine.

Examples of combinations of the hydroxyl groups and crosslinkable functional groups in the stain-proofing agent of the present invention, and a curing agent, are shown in the following Tables 1 to 3.

Examples of combinations of the hydroxyl groups, hydroxymethyl groups and crosslinkable functional groups in the stain-proofing agent of the present invention, and a curing agent, will be shown in the following Tables 1 to 3. The combination which is feasible, is identified by symbol ○. In the Tables 1 to 3, "hydroxyl group" means both a hydroxyl group and a hydroxymethyl group.

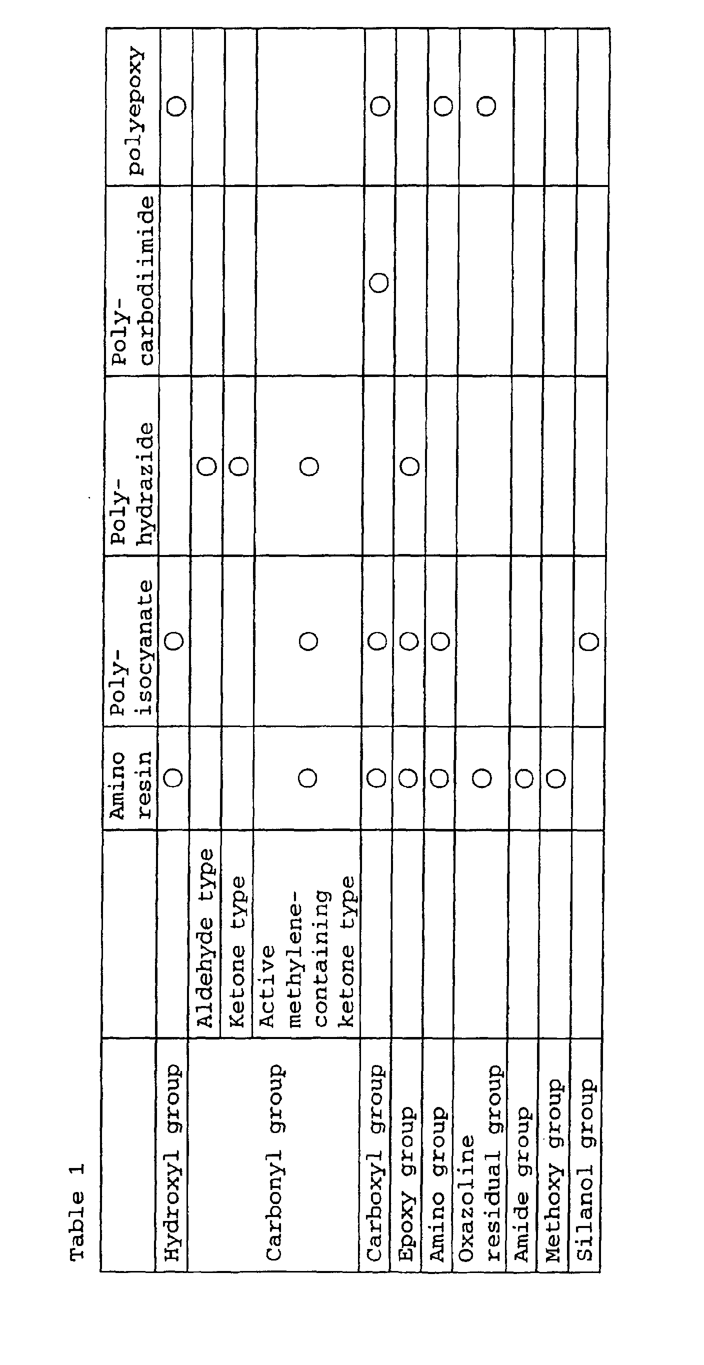

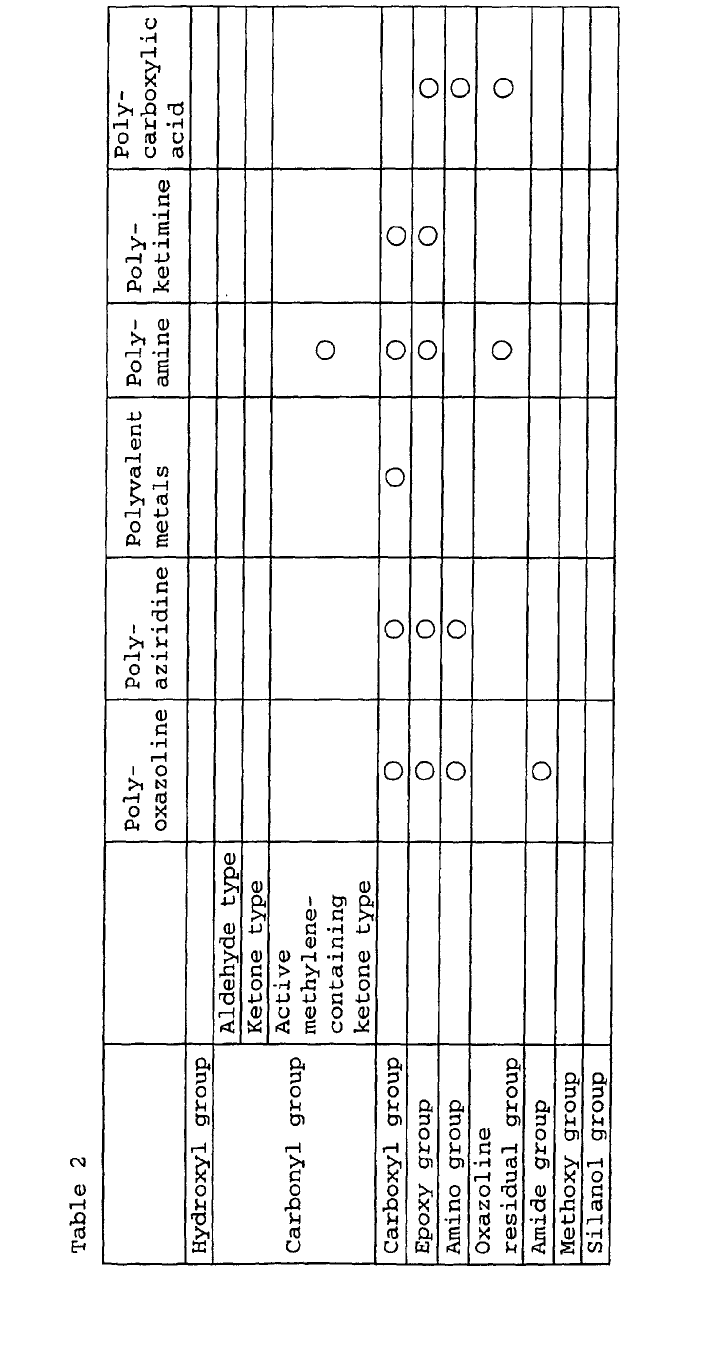

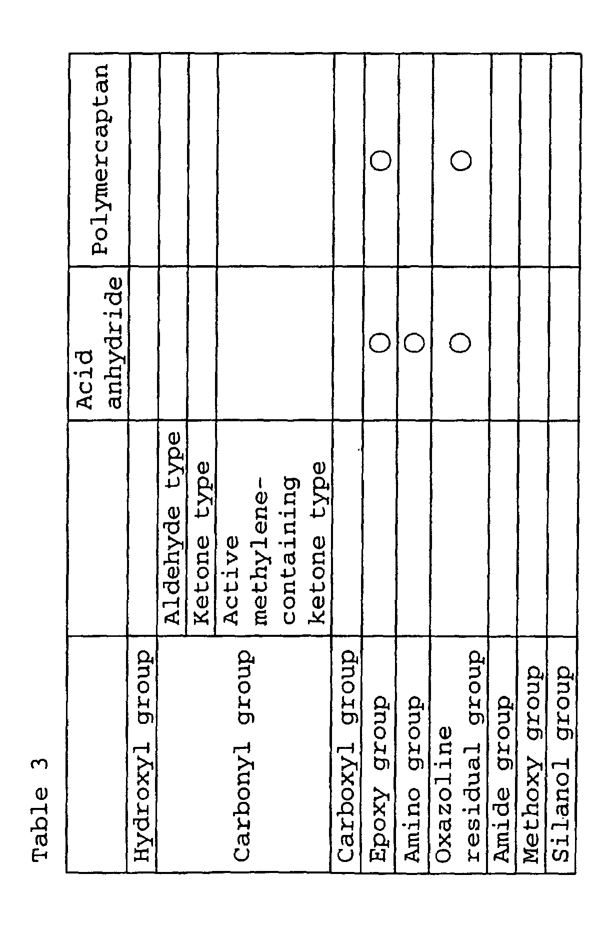

In such a crosslinking reaction, a curing accelerator may be employed. For example, in a case where a polyisocyanate compound is employed as a curing agent, a tin compound may, for example, be used as a curing accelerator. The tin compound may, for example, be dibutyltin dilaurate, dibutyltin di(maleic acid monoester), dioctyltin dilaurate, dioctyltin di(maleic acid monoester) or dibutyltin diacetate. In a case where an amino resin is used as a curing agent, N,N-dimethylethyl sulfamate may be employed. Further, in a reaction of an oxazoline residual group with a polycarboxylic acid compound, diammonium hydrogen phosphate may be employed.

Among the above-mentioned combinations of the crosslinkable functional group and the curing agent, one curable at room temperature in one liquid is preferred. For example, a combination of a carbonyl group and a polyhydrazide compound, a combination of an active methylene group and a polyamine compound, a combination of an oxazoline residual group and a polycarboxylic acid compound, or a combination of an oxazoline residual group and a polymercaptan compound may be mentioned. The amount of the curing agent to be incorporated, is preferably from 1 to 1,000 parts by mass per 100 parts by mass of the stain-proofing agent. Within this range, the stain resistance, the durability thereof and the stability of the coating material will be good. It is incorporated preferably in an amount of from 5 to 500 parts by mass, more preferably from 10 to 200 parts by mass.

The mechanism for the excellent rain streak stain resistance provided by the coating composition in the present invention, is not clearly understood, but may be explained as follows. A coating film formed by using the coating composition of the present invention has a small octane removal work in water. This indicates that even if an oil component contained in a stain substance at the urban area is once deposited on the coating film surface, it will be readily washed off by e.g. rain, and thus, the stain resistance is excellent. Further, by introducing a crosslinkable functional group other than hydroxyl groups and by incorporating a curing agent suitable thereto, such a hydrophilic component will be fixed to the coating film surface from the initial stage, whereby the stain resistance can be maintained for a long time.

In the case of a water base coating composition, additives which are commonly added to a water base coating material, such as a coloring agent, a film-forming adjuvant, a thickener, a plasticizer, a defoaming agent, an ultraviolet absorber, a leveling agent, a cissing-preventive agent, an antiskinning agent and a pigment dispersant, may be mixed as the case requires.

The coloring agent may, for example, be a dye, an organic pigment, an inorganic pigment or a metallic pigment. Particularly preferred is an inorganic pigment, whereby the coating film will be excellent in the weather resistance.

As the film forming adjuvant, an organic solvent may be used so long as it does not impair the stability of the water base coating composition. Specific examples include, for example, monoalkyl ethers of polyhydric alcohols such as dipropylene glycol mono n-butyl ether, tripropylene glycol mono n-butyl ether, ethylene glycol monoethyl ether, ethylene glycol mono n-butyl ether, diethylene glycol monoethyl ether and diethylene glycol mono n-butyl ether, organic acid esters of polyhydric alcohol monoalkyl ethers, such as diethylene glycol monoethyl ether monoacetate, 3-ethoxypropionates, and 3-methoxy-3-methyl-butyl acetate.

As the plasticizer, a conventional one may be used. Specific examples include, for example, a low molecular weight plasticizer such as dioctyl phthalate, and a polymer plasticizer such as a vinyl polymer type plasticizer or a polyester type plasticizer.

As the method for coating the coating material of the present invention, a commonly employed coating method can be used without any particular restriction, and coating by means of a brush or roller brush, an air spray coating, coating by means of a curtain flow coater, or coating by means of a roll coater, may, for example, be mentioned. The coating film obtained by such coating can be dried at room temperature to obtain a cured coating film in a case where a combination of a carbonyl group with a polyhydrazide compound, an active methylene group with polyamine compound, an oxazoline residual group with a polycarboxylic acid compound, or an oxazoline residual group with a polymercaptan compound, is used. By the above-mentioned crosslinking reaction, or in other crosslinking reactions, baking can be carried out at a high temperature to dry and obtain a cured coating film in a short time. The baking temperature is not particularly limited, but it is preferably not higher than the heat resistant temperature of the substrate to be coated. Usually, a temperature of not higher than 250°C is preferred.

The coating material employing the coating composition of the present invention may be coated on a new substrate or article before installing or after installing the substrate or article. Further, it is also suitable for repair-coating on an already coated substrate or article. Further, it is particularly suitable for coating of a substrate or article to be used outdoors.

The coating material employing the coating composition of the present invention can be preferably applied for coating of an inorganic substrate such as concrete, natural stone or glass, a metal substrate of e.g. iron, stainless steel, aluminum, copper, bronze or titanium. Further, it is also applicable to an organic/inorganic composite material such as a FRP, a resin-reinforced concrete, or a fiber-reinforced concrete. Furthermore, it is also applicable to a substrate having a coating layer formed by another resin composition.

As objects to which the coating material employing the coating composition of the present invention can be applied, in the transportation, construction, civil engineering and electric and electronic fields, for example, automobiles, electric cars, airplanes, bridge components, steel towers, tanks, pipes, building exterior panels, doors, windows, gates, other building components, center dividers, guard rails, other roadway components, communication equipments, and industrial materials such as electric and electronic parts, may be mentioned.

A coated article having the coating film formed by using the coating composition of the present invention, is excellent in the stain resistance. It is particularly excellent in the rain streak stain resistance. In the present invention, particularly preferred is a coated article having a coating film, wherein the octane removal work calculated from the contact angle of octane in water, of the coating film, is less than 3.0×10⁻² J/m². More preferred is a coating article having a coating film wherein the octane removal work is less than 2.0×10⁻² J/m². The octane removal work of the coating film is substantially the same as the octane removal work relating to the above-mentioned film formed from the stain-proofing agent and may be defined as one having the above-mentioned "film" replaced by the "coating film".

### EXAMPLES

Now, the present invention will be described in further detail with reference to Preparation Examples and Working Examples, but it should be understood that the present invention is by no means thereby restricted. In the following, "parts" and "%" are by mass, unless otherwise specified. Further, the weight average molecular weight is a value measured by using polystyrene as the standard substance by gel permeation chromatography. Further, abbreviations of the compounds used in the following respective Examples are shown in Tables 4 and 5.

**Table 4**

| Abbreviations | Compound names |
|---|---|
| NGAMA | N-glucosamine monomethacrylate |
| MA | Methacrylic acid |
| GA | D-glucosamine |
| GLM | Glycerol monomethacrylate |
| MAm | Methacrylamide |
| DOAm | N-(1,1-dimethyl-3-oxobutyl) acrylamide |
| AAEMA | 2-(acetoacetoxy)ethyl methacrylate |
| IPO | 2-isopropenyl-2-oxazoline |
| PME-400 | CH₂=C(CH₃)COO(C₂H₄O)ₚCH₃ (wherein p is about 9) (PME-400, tradename, manufactured by NOF Corporation) |
| NVP | N-vinyl pyrrolidone |
| NVA | N-vinyl acetoamide |
| MMA | Methyl methacrylate |
| 2-HEMA | 2-hydroxyethyl methacrylate |
| DSH | n-dodecylmercaptan |
| AIBN | 2,2'-azobisisobutylonitrile (V-59, tradename, manufactured by Wako Pure Chemical Industries, Ltd.) |
| AQ-100 | Self dispersible polyisocyanate (AQ-100, tradename, manufactured by Nippon Polyurethane Industry Co., Ltd.) |
| PVAL | Polyvinyl alcohol (number of repeating units: 2,000) |
| MC325 | Methyl-etherified melamine resin (MYCOAT #325, tradename, manufactured by Mitsui Cytec Ltd.) |
| ADH | Adipic dihydrazide |
| DETA | Diethylene triamine (adjusted to pH 7) |
| PZ33 | 2,2-bishydroxymethylbutanol-tris[3-(1-aziridinyl)propionate] (Chemitite PZ-33, tradename, manufactured by Nippon Shokubai Co., Ltd.) |
| HFZrA | Ammonium zirconium fluoride (adjusted to pH 7) |
| EDTA | Ethylene diamine tetraacetate (adjusted to pH 7) |
| TMT | 2,4,6-trimercapto-1,3,5,-triazine |
| EDMS | N,N-dimethylethyl sulfamate |
| PHDA | A 20% diammonium hydrogen phosphate aqueous solution |

**Table 5**

| Abbreviations | Compound names |
|---|---|
| N-MAA | N-hydroxymethyl acrylamide |
| EDTATH | Ethylenediamine tetraacetic acid tetrahydrazide |
| AlAc | Aluminum triethoxide |
| C-EH | Polyisocyanate (Colonate EH, tradename, manufactured by Nippon Polyurethane Industry Co., Ltd.) |
| J-679 | Joncryl 679, tradename, manufactured by Johnson Polymer Corporation) |

### Preparation of stain-proofing agents

### PREPARATION EXAMPLE 1

Into an autoclave having an internal capacity of 1 ℓ and equipped with a stirrer, 512.0 g of methanol, 83.6 g of MA, 9.7 g of chain transfer agent DSH and 2.4 g of polymerization initiator AIBN were charged and polymerized at 60°C for 18 hours with stirring in a nitrogen atmosphere. Further, 173.9 g of GA was added and reacted for 3 hours at 100°C at 0.5 MPa, to obtain a solution of polymer 1 having a solid content of 30%. The weight average molecular weight of the polymer 1 was 5000. From the solution of polymer 1, methanol was distilled off by a rotary evaporator, to obtain the polymer 1.

### PREPARATION EXAMPLE 2

Into an autoclave having an internal capacity of 1 ℓ and equipped with a stirrer, 512.0 g of methanol, 240.0 g of GLM, 24.0 g of MAm, 9.7 g of chain transfer agent DSH and 2.4 g of polymerization initiator AIBN were charged and polymerized at 60°C for 18 hours with stirring in a nitrogen atmosphere, to obtain a solution of polymer 2 having a solid content of 30%. The weight average molecular weight of the polymer 2 was 5000. From the solution of polymer 2, methanol was distilled off by a rotary evaporator, to obtain the polymer 2.

### PREPARATION EXAMPLE 3

Into an autoclave having an internal capacity of 1 ℓ and equipped with a stirrer, 512.0 g of methanol, 216.0 g of GLM, 24.0 g of MAm, 9.7 g of chain transfer agent DSH and 2.4 g of polymerization initiator AIBN were charged and polymerized at 60°C for 18 hours with stirring in a nitrogen atmosphere, to obtain a solution of polymer 3 having a solid content of 30%. The weight average molecular weight of the polymer 3 was 5000. From the solution of polymer 3, methanol was distilled off by a rotary evaporator, to obtain the polymer 3.

### PREPARATION EXAMPLE 4

Into an autoclave having an internal capacity of 1 ℓ and equipped with a stirrer, 512.0 g of methanol, 75.2 g of MA, 24.0 g of DOAm, 9.7 g of chain transfer agent DSH and 2.4 g of polymerization initiator AIBN were charged and polymerized at 60°C for 18 hours with stirring in a nitrogen atmosphere. Further, 156.5 g of GA was added and reacted at 100°C for 3 hours at 0.5 MPa, to obtain a solution of polymer 4 having a solid content of 30%. The weight average molecular weight of the polymer 4 was 5000. From the solution of polymer 4, methanol was distilled off by a rotary evaporator, to obtain the polymer 4.

### PREPARATION EXAMPLE 5

Into an autoclave having an internal capacity of 1 ℓ and equipped with a stirrer, 512.0 g of methanol, 216.0 g of GLM, 24.0 g of DOAm, 9.7 g of chain transfer agent DSH and 2.4 g of polymerization initiator AIBN were charged and polymerized at 60°C for 18 hours with stirring in a nitrogen atmosphere, to obtain a solution of polymer 5 having a solid content of 30%. The weight average molecular weight of the polymer 5 was 5000. From the solution of polymer 5, methanol was distilled off by a rotary evaporator, to obtain the polymer 5.

### PREPARATION EXAMPLE 6

Into an autoclave having an internal capacity of 1 ℓ and equipped with a stirrer, 512.0 g of methanol, 216.0 g of GLM, 24.0 g of AAEMA, 9.7 g of chain transfer agent DSH and 2.4 g of polymerization initiator AIBN were charged and polymerized at 60°C for 18 hours with stirring in a nitrogen atmosphere, to obtain a solution of polymer 6 having a solid content of 30%. The weight average molecular weight of the polymer 6 was 5000. From the solution of polymer 6, methanol was distilled off by a rotary evaporator, to obtain the polymer 6.

### PREPARATION EXAMPLE 7

Into an autoclave having an internal capacity of 1 ℓ and equipped with a stirrer, 512.0 g of methanol, 216.0 g of GLM, 24.0 g of MA, 9.7 g of chain transfer agent DSH and 2.4 g of polymerization initiator AIBN were charged and polymerized at 60°C for 18 hours with stirring in a nitrogen atmosphere, to obtain a solution of polymer 7 having a solid content of 30%. The weight average molecular weight of the polymer 7 was 5000. From the solution of polymer 7, methanol was distilled off by a rotary evaporator, to obtain the polymer 7.

### PREPARATION EXAMPLE 8

Into an autoclave having an internal capacity of 1 ℓ and equipped with a stirrer, 512.0 g of methanol, 216.0 g of GLM, 24.0 g of IPO, 9.7 g of chain transfer agent DSH and 2.4 g of polymerization initiator AIBN were charged and polymerized at 60°C for 18 hours with stirring in a nitrogen atmosphere, to obtain a solution of polymer 8 having a solid content of 30%. The weight average molecular weight of the polymer 8 was 5000. From the solution of polymer 8, methanol was distilled off by a rotary evaporator, to obtain the polymer 8.

### PREPARATION EXAMPLE 9

Into an autoclave having an internal capacity of 1 ℓ and equipped with a stirrer, 512.0 g of methanol, 168.0 g of GLM, 24.0 g of DOAm, 48.0 g of PME-400, 9.7 g of chain transfer agent DSH and 2.4 g of polymerization initiator AIBN were charged and polymerized at 60°C for 18 hours with stirring in a nitrogen atmosphere, to obtain a solution of polymer 9 having a solid content of 30%. The weight average molecular weight of the polymer 9 was 5000. From the solution of polymer 9, methanol was distilled off by a rotary evaporator, to obtain the polymer 9.

### PREPARATION EXAMPLE 10

Into an autoclave having an internal capacity of 1 ℓ and equipped with a stirrer, 512.0 g of methanol, 168.0 g of GLM, 24.0 g of DOAm, 48.0 g of NVP, 9.7 g of chain transfer agent DSH and 2.4 g of polymerization initiator AIBN were charged and polymerized at 60°C for 18 hours with stirring in a nitrogen atmosphere, to obtain a solution of polymer 10 having a solid content of 30%. The weight average molecular weight of the polymer 10 was 5000. From the solution of polymer 10, methanol was distilled off by a rotary evaporator, to obtain the polymer 10.

### PREPARATION EXAMPLE 11

Into an autoclave having an internal capacity of 1 ℓ and equipped with a stirrer, 512.0 g of methanol, 168.0 g of GLM, 24.0 g of DOAm, 48.0 g of NVA, 9.7 g of chain transfer agent DSH and 2.4 g of polymerization initiator AIBN were charged and polymerized at 60°C for 18 hours with stirring in a nitrogen atmosphere, to obtain a solution of polymer 11 having a solid content of 30%. The weight average molecular weight of the polymer 11 was 5000. From the solution of polymer 11, methanol was distilled off by a rotary evaporator, to obtain the polymer 11.

### PREPARATION EXAMPLE 12

Into an autoclave having an internal capacity of 1 ℓ and equipped with a stirrer, 512.0 g of methanol, 168.0 g of GLM, 24.0 g of DOAm, 48.0 g of MMA, 9.7 g of chain transfer agent DSH and 2.4 g of polymerization initiator AIBN were charged and polymerized at 60°C for 18 hours with stirring in a nitrogen atmosphere, to obtain a solution of polymer 12 having a solid content of 30%. The weight average molecular weight of the polymer 12 was 5000. From the solution of polymer 12, methanol was distilled off by a rotary evaporator, to obtain the polymer 12.

### PREPARATION EXAMPLE 13

Into an autoclave having an internal capacity of 1 ℓ and equipped with a stirrer, 512.0 g of acetone, 12.0 g of GLM, 24.0 g of DOAm, 204.0 g of MMA, 9.7 g of chain transfer agent DSH and 2.4 g of polymerization initiator AIBN were charged and polymerized at 60°C for 18 hours with stirring in a nitrogen atmosphere, to obtain a solution of polymer 13 having a solid content of 30%. The weight average molecular weight of the polymer 13 was 5000. From the solution of polymer 13, acetone was distilled off by a rotary evaporator, to obtain the polymer 13.

### PREPARATION EXAMPLE 14

Into an autoclave having an internal capacity of 1 ℓ and equipped with a stirrer, 512.0 g of methanol, 240.0 g of N-MAA, 9.7 g of chain transfer agent DSH and 2.4 g of polymerization initiator AIBN were charged and polymerized at 60°C for 18 hours with stirring in a nitrogen atmosphere, to obtain a solution of polymer 14 having a solid content of 30%. The weight average molecular weight of the polymer 14 was 5000. From the solution of polymer 14, methanol was distilled off by a rotary evaporator, to obtain the polymer 14.

### PREPARATION EXAMPLE 15

Into an autoclave having an internal capacity of 1 ℓ and equipped with a stirrer, 512.0 g of methanol, 216.0 g of N-MAA, 24.0 g of MAm, 9.7 g of chain transfer agent DSH and 2.4 g of polymerization initiator AIBN were charged and polymerized at 60°C for 18 hours with stirring in a nitrogen atmosphere, to obtain a solution of polymer 15 having a solid content of 30%. The weight average molecular weight of the polymer 15 was 5000. From the solution of polymer 15, methanol was distilled off by a rotary evaporator, to obtain the polymer 15.

### PREPARATION EXAMPLE 16

Into an autoclave having an internal capacity of 1 ℓ and equipped with a stirrer, 512.0 g of methanol, 216.0 g of N-MAA, 24.0 g of DOAm, 9.7 g of chain transfer agent DSH and 2.4 g of polymerization initiator AIBN were charged and polymerized at 60°C for 18 hours with stirring in a nitrogen atmosphere, to obtain a solution of polymer 16 having a solid content of 30%. The weight average molecular weight of the polymer 16 was 5000. From the solution of polymer 16, methanol was distilled off by a rotary evaporator, to obtain the polymer 16.

### PREPARATION EXAMPLE 17

Into an autoclave having an internal capacity of 1 ℓ and equipped with a stirrer, 512.0 g of methanol, 216.0 g of N-MAA, 24.0 g of AAEMA, 9.7 g of chain transfer agent DSH and 2.4 g of polymerization initiator AIBN were charged and polymerized at 60°C for 18 hours with stirring in a nitrogen atmosphere, to obtain a solution of polymer 17 having a solid content of 30%. The weight average molecular weight of the polymer 17 was 5000. From the solution of polymer 17, methanol was distilled off by a rotary evaporator, to obtain the polymer 17.

### PREPARATION EXAMPLE 18

Into an autoclave having an internal capacity of 1 ℓ and equipped with a stirrer, 512.0 g of methanol, 216.0 g of N-MAA, 24.0 g of MA, 9.7 g of chain transfer agent DSH and 2.4 g of polymerization initiator AIBN were charged and polymerized at 60°C for 18 hours with stirring in a nitrogen atmosphere, to obtain a solution of polymer 18 having a solid content of 30%. The weight average molecular weight of the polymer 18 was 5000. From the solution of polymer 18, methanol was distilled off by a rotary evaporator, to obtain the polymer 18.

### PREPARATION EXAMPLE 19

Into an autoclave having an internal capacity of 1 ℓ and equipped with a stirrer, 512.0 g of methanol, 216.0 g of N-MAA, 9.7 g of chain transfer agent DSH and 2.4 g of polymerization initiator AIBN were charged and polymerized at 60°C for 18 hours with stirring in a nitrogen atmosphere, to obtain a solution of polymer 19 having a solid content of 30%. The weight average molecular weight of the polymer 19 was 5000. From the solution of polymer 19, methanol was distilled off by a rotary evaporator, to obtain the polymer 19.

### PREPARATION EXAMPLE 20

Into an autoclave having an internal capacity of 1 ℓ and equipped with a stirrer, 512.0 g of methanol, 168.0 g of N-MAA, 24.0 g of DOAm, 48.0 g of PME-400, 9.7 g of chain transfer agent DSH and 2.4 g of polymerization initiator AIBN were charged and polymerized at 60°C for 18 hours with stirring in a nitrogen atmosphere, to obtain a solution of polymer 20 having a solid content of 30%. The weight average molecular weight of the polymer 20 was 5000. From the solution of polymer 20, methanol was distilled off by a rotary evaporator, to obtain the polymer 20.

### PREPARATION EXAMPLE 21

Into an autoclave having an internal capacity of 1 ℓ and equipped with a stirrer, 512.0 g of methanol, 168.0 g of N-MAA, 24.0 g of DOAm, 48.0 g of GLM, 9.7 g of chain transfer agent DSH and 2.4 g of polymerization initiator AIBN were charged and polymerized at 60°C for 18 hours with stirring in a nitrogen atmosphere, to obtain a solution of polymer 21 having a solid content of 30%. The weight average molecular weight of the polymer 21 was 5000. From the solution of polymer 21, methanol was distilled off by a rotary evaporator, to obtain the polymer 21.

### PREPARATION EXAMPLE 22

Into an autoclave having an internal capacity of 1 ℓ and equipped with a stirrer, 512.0 g of methanol, 168.0 g of N-MAA, 24.0 g of DOAm, 48.0 g of NVP, 9.7 g of chain transfer agent DSH and 2.4 g of polymerization initiator AIBN were charged and polymerized at 60°C for 18 hours with stirring in a nitrogen atmosphere, to obtain a solution of polymer 22 having a solid content of 30%. The weight average molecular weight of the polymer 22 was 5000. From the solution of polymer 22, methanol was distilled off by a rotary evaporator, to obtain the polymer 22.

### PREPARATION EXAMPLE 23

Into an autoclave having an internal capacity of 1 ℓ and equipped with a stirrer, 512.0 g of methanol, 168.0 g of N-MAA, 24.0 g of DOAm, 48.0 g of NVA, 9.7 g of chain transfer agent DSH and 2.4 g of polymerization initiator AIBN were charged and polymerized at 60°C for 18 hours with stirring in a nitrogen atmosphere, to obtain a solution of polymer 23 having a solid content of 30%. The weight average molecular weight of the polymer 23 was 5000. From the solution of polymer 23, methanol was distilled off by a rotary evaporator, to obtain the polymer 23.

### PREPARATION EXAMPLE 24

Into an autoclave having an internal capacity of 1 ℓ and equipped with a stirrer, 512.0 g of methanol, 168.0 g of N-MAA, 24.0 g of DOAm, 48.0 g of MMA, 9.7 g of chain transfer agent DSH and 2.4 g of polymerization initiator AIBN were charged and polymerized at 60°C for 18 hours with stirring in a nitrogen atmosphere, to obtain a solution of polymer 24 having a solid content of 30%. The weight average molecular weight of the polymer 24 was 5000. From the solution of polymer 24, methanol was distilled off by a rotary evaporator, to obtain the polymer 24.

### PREPARATION EXAMPLE 25

Into an autoclave having an internal capacity of 1 ℓ and equipped with a stirrer, 512.0 g of methanol, 168.0 g of N-MAA, 24.0 g of DOAm, 24.0 g of PME-400, 24.0 g of MMA, 9.7 g of chain transfer agent DSH and 2.4 g of polymerization initiator AIBN were charged and polymerized at 60°C for 18 hours with stirring in a nitrogen atmosphere, to obtain a solution of polymer 25 having a solid content of 30%. The weight average molecular weight of the polymer 25 was 5000. From the solution of polymer 25, methanol was distilled off by a rotary evaporator, to obtain the polymer 25.

### PREPARATION EXAMPLE 26

Into an autoclave having an internal capacity of 1 ℓ and equipped with a stirrer, 512.0 g of acetone, 72.0 g of N-MAA, 24.0 g of DOAm, 144.0 g of MMA, 9.7 g of chain transfer agent DSH and 2.4 g of polymerization initiator AIBN were charged and polymerized at 60°C for 18 hours with stirring in a nitrogen atmosphere, to obtain a solution of polymer 26 having a solid content of 30%. The weight average molecular weight of the polymer 26 was 5000. From the solution of polymer 26, acetone was distilled off by a rotary evaporator, to obtain the polymer 26.

### PREPARATION EXAMPLE 27

Into an autoclave having an internal capacity of 1 ℓ and equipped with a stirrer, 512.0 g of methanol, 36.0 g of N-MAA, 120.0 g of GLM, 36.0 g of DAAm, 24.0 g of PME-400, 24.0 g of AAm, 9.7 g of chain transfer agent DSH and 2.4 g of polymerization initiator V-59 were charged and polymerized at 60°C for 18 hours with stirring in a nitrogen atmosphere, to obtain a solution of polymer 27 having a solid content of 30%. The weight average molecular weight of the polymer 27 was 5000. From the solution of polymer 27, methanol was distilled off by a rotary evaporator, to obtain the polymer 27.

### PREPARATION EXAMPLE 28

Into an autoclave having an internal capacity of 1 ℓ and equipped with a stirrer, 512.0 g of methanol, 120.0 g of N-MAA, 36.0 g of DAAm, 24.0 g of PME-400, 60.0 g of AAm, 9.7 g of chain transfer agent DSH and 2.4 g of polymerization initiator V-59 were charged and polymerized at 60°C for 18 hours with stirring in a nitrogen atmosphere, to obtain a solution of polymer 28 having a solid content of 30%. The weight average molecular weight of the polymer 28 was 5000. From the solution of polymer 28, methanol was distilled off by a rotary evaporator, to obtain the polymer 28.

### PREPARATION EXAMPLE 29

Into an autoclave having an internal capacity of 1 ℓ and equipped with a stirrer, 512.0 g of methanol, 120.0 g of GLM, 36.0 g of DAAm, 24.0 g of PME-400, 60.0 g of AAm, 9.7 g of chain transfer agent DSH and 2.4 g of polymerization initiator V-59 were charged and polymerized at 60°C for 18 hours with stirring in a nitrogen atmosphere, to obtain a solution of polymer 29 having a solid content of 30%. The weight average molecular weight of the polymer 29 was 5000. From the solution of polymer 29, methanol was distilled off by a rotary evaporator, to obtain the polymer 29.

### PREPARATION EXAMPLE 30

Into an autoclave having an internal capacity of 1 ℓ and equipped with a stirrer, 512.0 g of methanol, 36.0 g of N-MAA, 144.0 g of GLM, 36.0 g of DAAm, 24.0 g of PME-400, 9.7 g of chain transfer agent DSH and 2.4 g of polymerization initiator V-59 were charged and polymerized at 60°C for 18 hours with stirring in a nitrogen atmosphere, to obtain a solution of polymer 30 having a solid content of 30%. The weight average molecular weight of the polymer 30 was 5000. From the solution of polymer 30, methanol was distilled off by a rotary evaporator, to obtain the polymer 30.

### PREPARATION EXAMPLE 31

Into an autoclave having an internal capacity of 1 ℓ and equipped with a stirrer, 512.0 g of methanol, 36.0 g of N-MAA, 156.0 g of GLM, 24.0 g of PME-400, 24.0 g of AAm, 9.7 g of chain transfer agent DSH and 2.4 g of polymerization initiator V-59 were charged and polymerized at 60°C for 18 hours with stirring in a nitrogen atmosphere, to obtain a solution of polymer 31 having a solid content of 30%. The weight average molecular weight of the polymer 31 was 5000. From the solution of polymer 31, methanol was distilled off by a rotary evaporator, to obtain the polymer 31.

### Evaluation of the octane removal work of each polymer

Using each of the polymers 1 to 31 and J-679, a film was formed on the surface of an aluminum plate. The contact angle of octane to the film in water was measured. From the measured contact angle, the octane removal work was obtained. The results are shown in Tables 6 and 7.

### Glass transition temperature of each polymer

The glass transition temperature (T_{g}) (unit: °C) of each of the polymers 1 to 31 was calculated from T_{g} of a homopolymer of each monomer constituting the polymer by means of the formula of 1/T_{g}=ΣWᵢ/T_{gi} (wherein Wᵢ is the mass fraction of each monomer constituting the copolymer, and T_{gi} is the glass transition temperature of the homopolymer formed from each monomer).

### Solubility parameter of each polymer

The solubility parameter (SP value) [unit: (J/m³)^{1/2}×10⁻²] of each of the polymers 1 to 31 was calculated by the Fedors method [Polym. Eng. Sci. 14[2]147 (1974)].

### Stability of the aqueous solution

Each of the polymer 1 to 31 and J-679, was diluted with water to prepare a 50% aqueous solution, which was stored at 50°C for two weeks, whereupon the aqueous solution was visually inspected, whereby one free from abnormality was identified by ○, and one wherein a viscosity increase or gelation was observed, was identified by ×.

**Table 6**

| Polymer | Octane removal work (×10⁻² J/m²) | T_{g} | SP Value | Stability of the aqueous solution |
|---|---|---|---|---|
| 1 | 0 | 85 | 3.9 | × |
| 2 | 0 | 67 | 3.0 | × |
| 3 | 0 | 72 | 3.0 | × |
| 4 | 0 | 84 | 3.7 | × |
| 5 | 0 | 68 | 2.9 | × |
| 6 | 0 | 105 | 2.9 | × |
| 7 | 0 | 72 | 2.9 | × |
| 8 | 0 | 105 | 2.9 | × |
| 9 | 0 | 37 | 2.5 | ○ |
| 10 | 0 | 65 | 2.8 | × |
| 11 | 0.5 | 153 | 2.9 | × |
| 12 | 0.7 | 75 | 2.7 | × |
| 13 | 3.5 | 100 | 2. 0 | × |
| PVAL | 3.0 | 70 | 3.3 | × |

**Table 7**

| Polymer | Octane removal work (×10⁻² J/m²) | T_{g} | SP Value | Stability of the aqueous solution |
|---|---|---|---|---|
| 14 | 0 | 94 | 3.6 | × |
| 15 | 0 | 97 | 3.5 | × |
| 16 | 0 | 92 | 3.3 | × |
| 17 | 0 | 89 | 3.3 | × |
| 18 | 0 | 97 | 3.4 | × |
| 19 | 0 | 91 | 3.4 | × |
| 20 | 0 | 52 | 2.6 | ○ |
| 21 | 0 | 86 | 3.2 | × |
| 22 | 0.3 | 83 | 3.1 | × |
| 23 | 0.5 | 93 | 3.2 | × |
| 24 | 0.7 | 94 | 3.0 | × |
| 25 | 0.5 | 72 | 2.7 | ○ |
| 26 | 3.6 | 99 | 2.4 | × |
| 27 | 0 | 62 | 2.7 | ○ |
| 28 | 0 | 82 | 2.7 | ○ |
| 29 | 0 | 69 | 2.6 | ○ |
| 30 | 0 | 56 | 2.7 | ○ |
| 31 | 0 | 61 | 2.7 | ○ |
| J-679 | 2.2 | 85 | - | ○ |

### Formulation of base coating materials

### FORMULATION EXAMPLE 1: Base white coating material 1

Into a stainless steel autoclave (internal capacity of 200 ml) equipped with a stirrer, 105.3 g of deionized water, 2.0 g of nonionic emulsifier N-1110 (manufactured by Nippon Nyukazai Co., Ltd.; hereinafter referred to as N-1110), 0.2 g of sodium dodecyl sulfate, 0.07 g of an aqueous solution containing 25 mass% of ammonium persulfate, 0.22 g of potassium carbonate, 0.02 g of sodium hydrogen sulfite, 21.2 g of ethyl vinyl ether, 21.0 g of cyclohexyl vinyl ether, 3.4 g of CH₂=CHOCH₂C₆H₁₀CH₂OH and 8.2 g of CH₂=CHOCH₂C₆H₁₀CH₂O(C₂H₄O)ₖH (wherein k is about 15 as an average value) were charged and cooled with ice, and nitrogen gas was introduced to a pressure of 0.35 MPa and then purged to return to 0.1 MPa.

Such pressurizing and purging were repeated twice, followed by deaeration to 1.3 × 10⁴ Pa by means of a vacuum pump to remove the remaining air, whereupon 56.7 g of chlorotrifluoroethylene was charged, and a polymerization reaction was carried out at 30°C for 12 hours, to obtain an aqueous dispersion 1 of a fluororesin 1. The average particle size of the fluororesin 1 in the aqueous dispersion 1 was 140 nm, and the solid content concentration was 50 mass%.

71 Parts of the above aqueous dispersion 1, 3.6 parts of film-forming adjuvant Cs-12 (manufactured by Chisso Corporation), 0.3 part of thickener Rheobis CR (manufactured by Hoechst Gosei K.K.), 15.4 parts of titanium oxide CR-97 (manufactured by Ishihara Sangyo Kaisha, Ltd.), 0.8 part of pigment dispersant Nopcosperse 44-C (manufactured by San Nopco Limited), 0.6 part of defoaming agent FS Antifoam 90 (manufactured by Dow Corning Ltd.) and 10.3 parts of deionized water were mixed to obtain a base white coating material 1. The concentration of the fluororesin 1 in the base white coating material 1 was 34.8%.

### FORMULATION EXAMPLE 2: Base white coating material 2

15.0 g of DOAm, 50.0 g of MMA, 30.0 g of n-butyl methacrylate, 5.0 g of MA, 1.0 g of N-1110, 0.3 g of sodium lauryl sulfate and 100 g of deionized water were stirred and mixed to obtain a pre-emulsion 1. Then, into a glass flask having an internal capacity of 300 ml, 170 g of the aqueous dispersion 1 was charged and heated until the temperature became 70°C, whereupon 30 g of the pre-emulsion 1 was dropwise added thereto over a period of one hour.

After stirring for further one hour, 1 ml of an aqueous solution containing 0.5 mass% of ammonium persulfate was added to initiate polymerization. Upon expiration of 4.5 hours, an aqueous dispersion 2 of a fluorinated acrylic resin 1 containing the fluororesin 1 and a (meth)acrylate component in a mass ratio of 17:3, was obtained. The solid content concentration in the aqueous dispersion 2 was 50%.

71 Parts of the above aqueous dispersion 2, 3.6 parts of Cs-12, 0.3 part of Rheobis CR, 15.4 parts of CR-97, 0.8 part of Nopcosperse 44-C, 0.6 part of FS Antifoam 90 and 10.3 parts of deionized water were mixed and adjusted with aqueous ammonia to pH 7.0, to obtain a base white coating material 2. The concentration of the fluorinated acrylic resin 1 in the base white coating material 2 was 34.8%.

### FORMULATION EXAMPLE 3: Base white coating material 3

Into a stainless steel autoclave (internal capacity of 2.5 ℓ) equipped with a stirrer, 1100 g of deionized water, 4.75 g of a fluorine type anionic emulsifier FC-143 (manufactured by Sumitomo 3M Limited), 2.2 parts of N-1110 and 47.0 g of tert-butyl alcohol were charged, and deaeration by a vacuum pump and pressurizing by nitrogen gas were repeated. Then, 72.0 g of tetrafluoroethylene, 1.1 g of propylene and 1.4 g of ethylene were charged. When the temperature in the autoclave reached 70°C, the pressure was 1.34 MPa. While maintaining the temperature at 70°C, 2 ml of an aqueous solution containing 25 mass% of ammonium persulfate was added to initiate polymerization. As the pressure lowered, a mixed gas of tetrafluoroethylene/propylene/ethylene in a ratio of 50/25/25 (mol%) was charged to maintain the pressure. Further, 30 ml of the aqueous solution containing 25 mass% of ammonium persulfate was continuously added. Upon expiration of 8 hours, supply of the mixed gas was terminated, and the autoclave was cooled with water to room temperature, whereupon non-polymerized monomers were purged, to obtain an aqueous dispersion 3 of a fluororesin 3. The post-charged amount of the mixed gas was 861.5 g in total. The solid content concentration in the aqueous dispersion 3 was 43.1%.

A part of the aqueous dispersion 3 was subjected to a centrifugal separator and precipitated, followed by filtration with a glass filter, and water was removed under reduced pressure over a period of 5 hours, followed by pulverization by a hummer mill, to obtain a powder of a fluoropolymer 3. As a result of the analysis of the composition by the 13C-NMR spectrum, the composition of the fluoroolefin 3 was such that the ratio of polymerized units of tetrafluoroethylene/propylene/ethylene was 52/28/20 (mol%). Further, the melting point was 96.2°C.

Into a glass flask having an internal capacity of 300 ml, 170 g of the above aqueous dispersion 3 was charged, the inside of the flask was sufficiently replaced with nitrogen, the temperature was raised to 70°C, and 26 g of the pre-emulsion 1 was dropwise added thereto over a period of one hour. After dispersing further with stirring for one hour, 1 ml of an aqueous solution containing 0.5 mass% of ammonium persulfate was added to initiate polymerization. Upon expiration of 4.5 hours, an aqueous dispersion 4 of a fluorinated acrylic resin 2 containing the fluororesin 3 and a (meth)acrylate component in a mass ratio of 17:3, was obtained. The solid content concentration in the aqueous dispersion 4 was 43.8%.

71 Parts of the above aqueous dispersion 4, 3.6 parts of Cs-12, 0.3 part of Rheobis CR, 15.4 parts of CR-97, 0.8 part of Nopcosperse 44-C, 0.6 part of FS Antifoam 90 and 10.3 parts of deionized water were mixed and adjusted with aqueous ammonia to pH 7.0, to obtain a base white coating material 3. The concentration of the fluorinated acrylic resin 2 in the base white coating material 3 was 30.5%.

### FORMULATION EXAMPLE 4: Base white coating material 4

58.4 g of LF-200 (a solvent type fluororesin, manufactured by Asahi Glass Company, Limited, tradename: Lumiflon), 15.0 g of CR-90 (manufactured by Ishihara Sangyo Kaisha, Ltd.) and 26.6 g of xylene were mixed to obtain a base white coating material 4.

### EXAMPLES 1 to 37

In the proportions as identified in Tables 8, 9, 10, 11, 12, 13 and 14, the polymers 1 to 31, PVAL, J-679, curing agents, and, if necessary, curing accelerators, were added to the base white coating materials 1 to 4, to obtain coating compositions. Further, the pH was adjusted to 7.0 with ammonia or hydrochloric acid, as the case required. The coating compositions were coated on aluminum plates having a size of 200x95x8 mm so that the dried film thickness would be 20 µm, followed by drying under the conditions as identified in Tables 8 to 14 to obtain coated plates. The results of evaluation of the aqueous coating compositions and the coated plates are shown in Tables 8 to 14. Examples 1 to 15, 20 to 34 and 38 to 41 are Examples of the present invention, and Examples 16 to 19, 35 to 37 and 42 to 44 are Comparative Examples. The evaluation items in the following Tables were measured in accordance with the following methods.

Gloss: The 60° specular gloss was measured in accordance with JIS Z8741. The larger the numerical value, the superior the gloss.

Octane removal work: The contact angle of octane to the coating film in water was measured. From the measured contact angle, the octane removal work was obtained.

Slant face stain resistance: A coated plate (size: 200×95×8 mm) was bent at 100 mm and subjected to outdoor exposure in Kawasaki city in Kanagawa prefecture so that the upper portion was inclined at an angle of 30° from the horizontal plane, the lower portion became vertical, and the coated surface faced outside. The L*value of the 30° slant face was measured upon expiration of three months and one year of exposure of this coated plate. The difference ΔL* in the L*value before and after the test was calculated and represented by the absolute value. Here, the L*value was measured in accordance with JIS Z8730 using SQ2000 (manufactured by Nihon Denshoku Kogyo K.K.). The smaller the numerical value, the superior the slant face stain resistance. In the Tables, the exposure starting month is indicated in ( ).

Rain streak stain resistance: With respect to the outdoor exposure plate, of which the slant face stain was evaluated, the degree of the rain streak stain on the vertical surface was also evaluated. One having no distinct rain streak stain was identified by ○, one having a distinct stain to some extent was identified by Δ, and one having a distinct substantial stain was identified by ×. In the Tables, the exposure starting month is indicated in ( ).

Accelerated weather resistance: The gloss retention was measured upon expiration of 4000 hours of the carbon arc lamp system accelerated weather resistance test as prescribed in JIS K5400 9.8.1. A gloss retention of at least 80% was represented by ○, and a gloss retention of less than 80% was represented by ×.

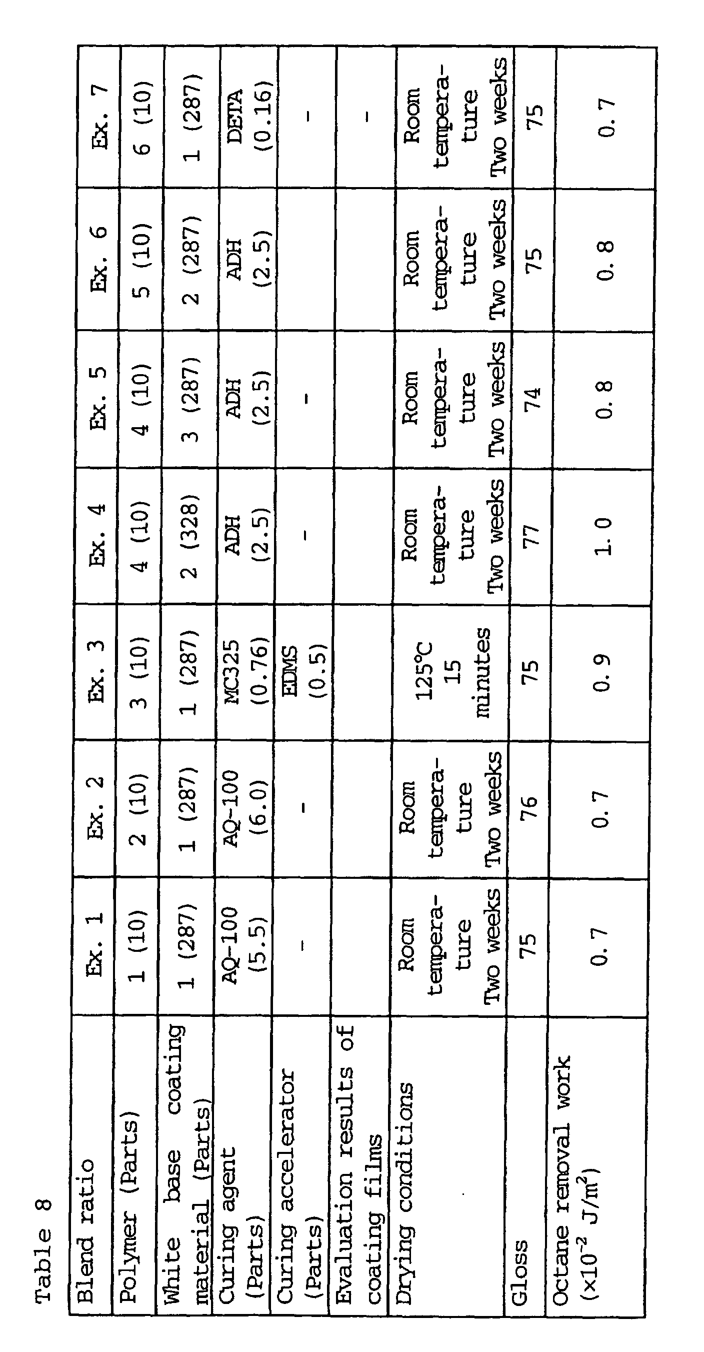

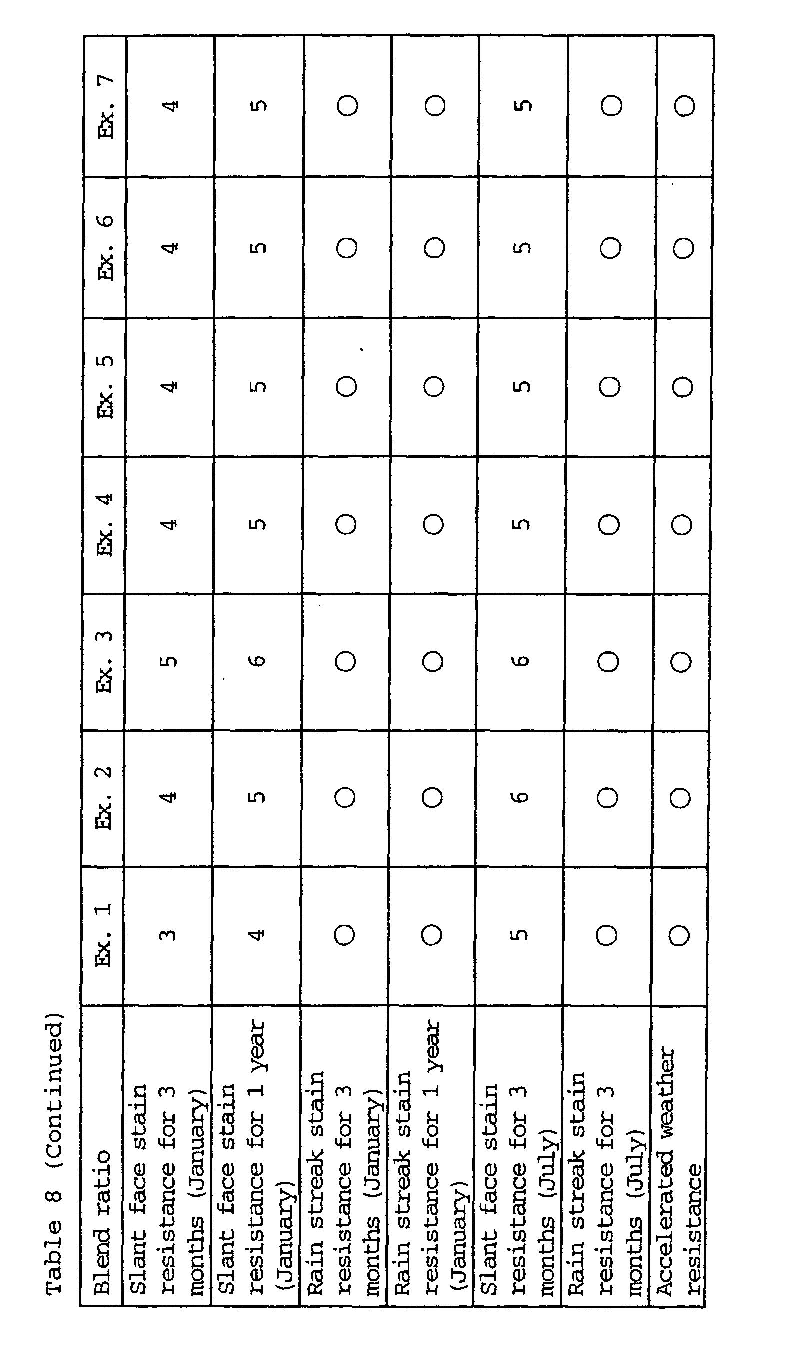

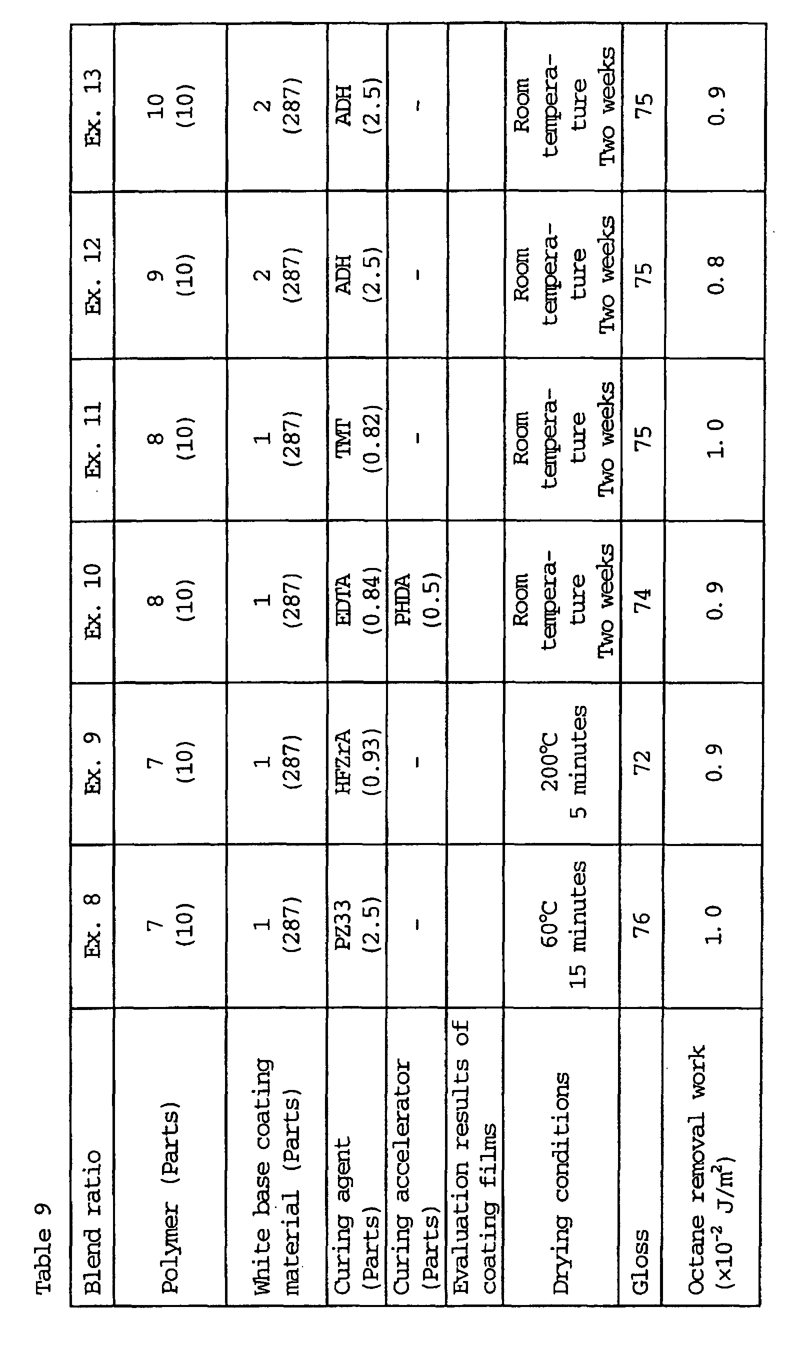

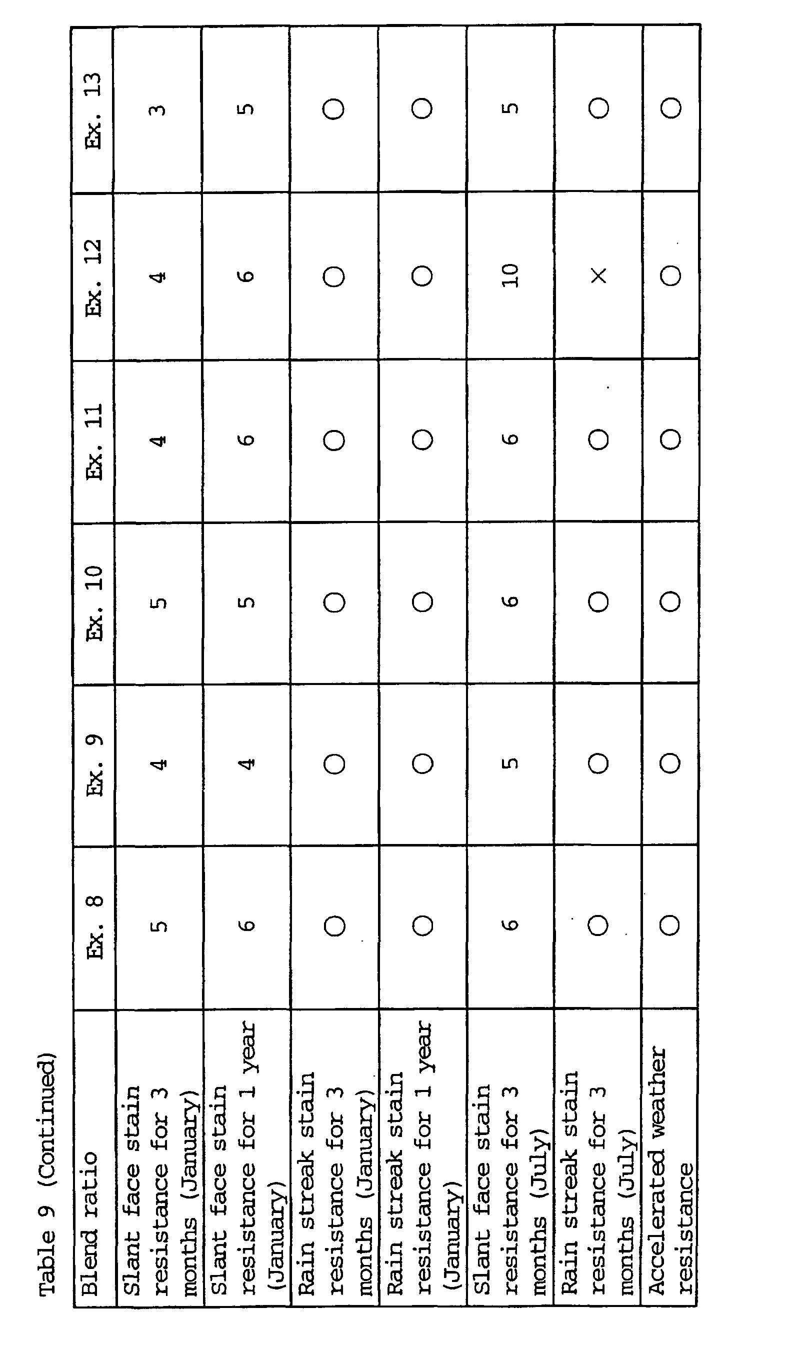

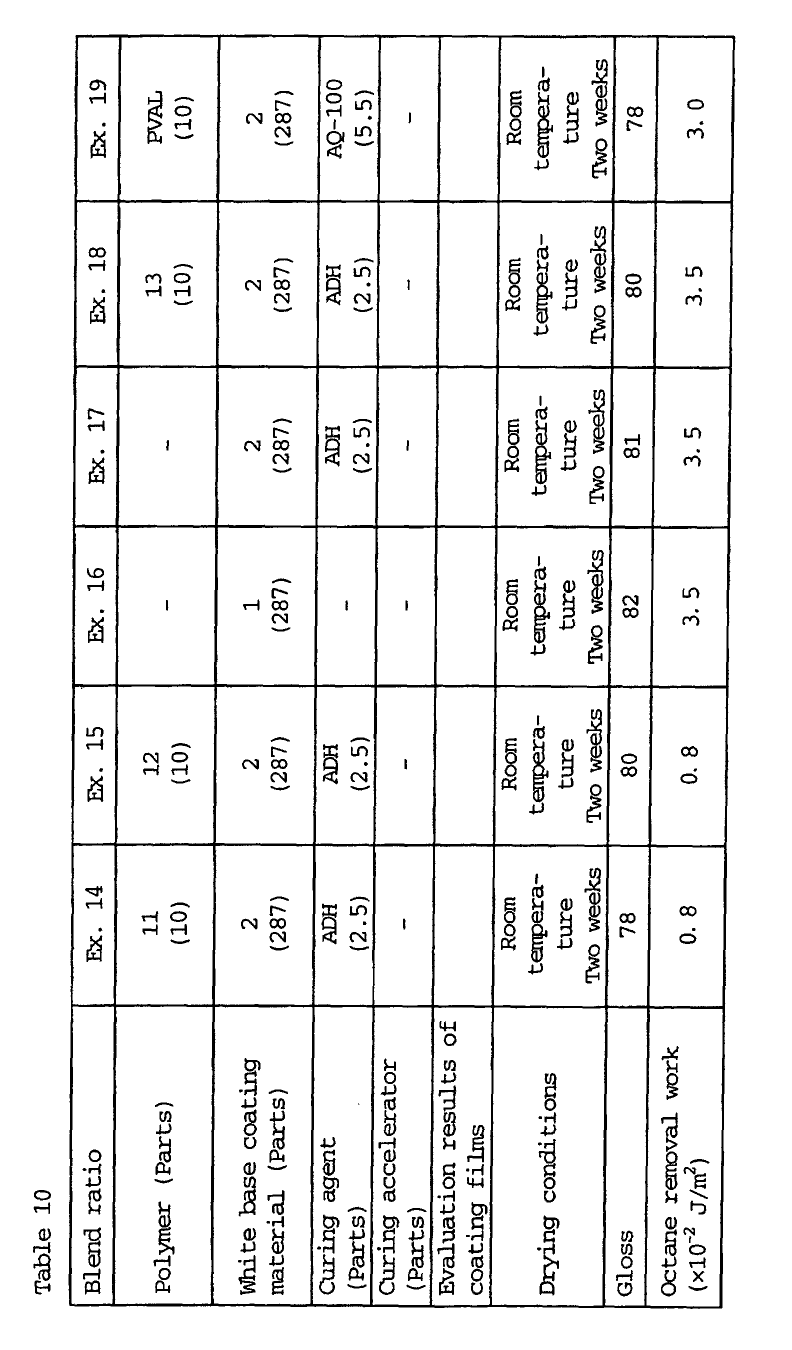

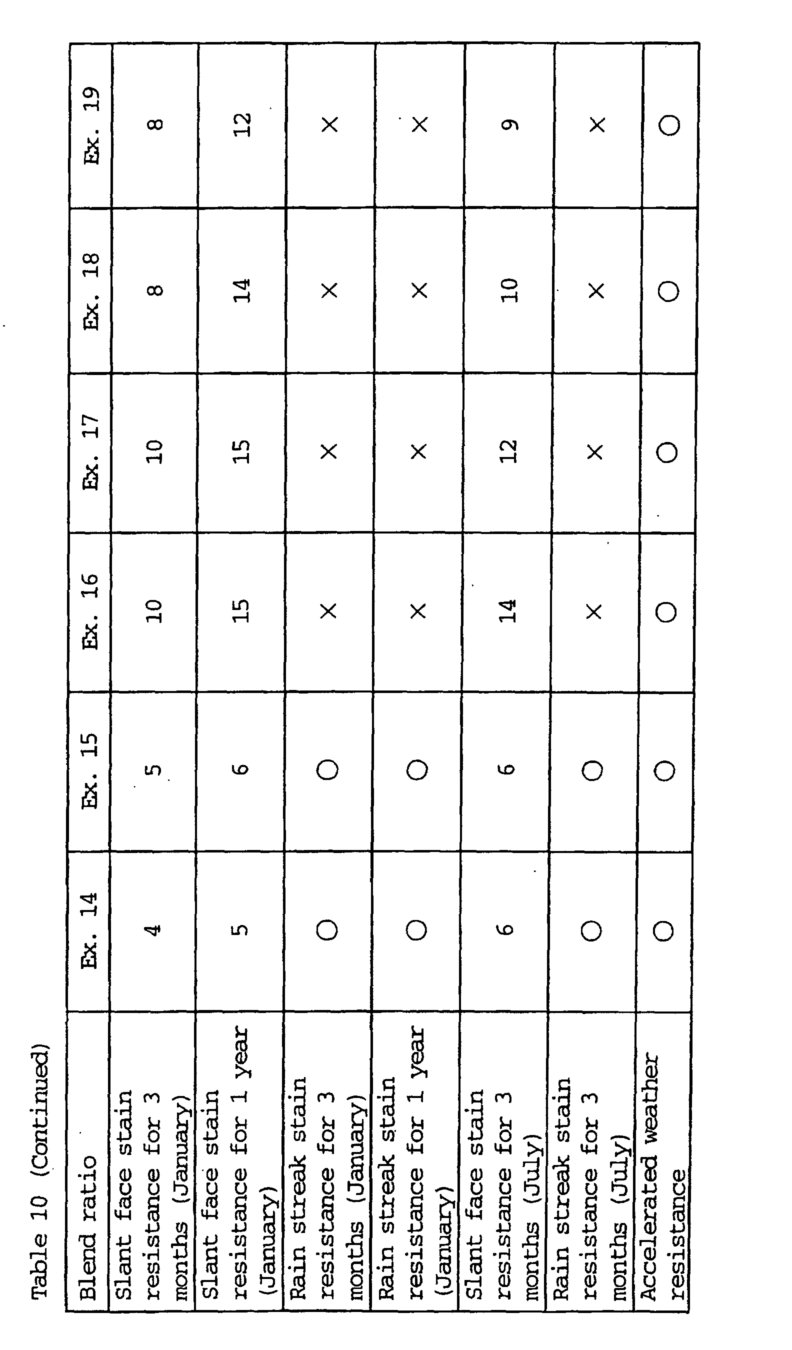

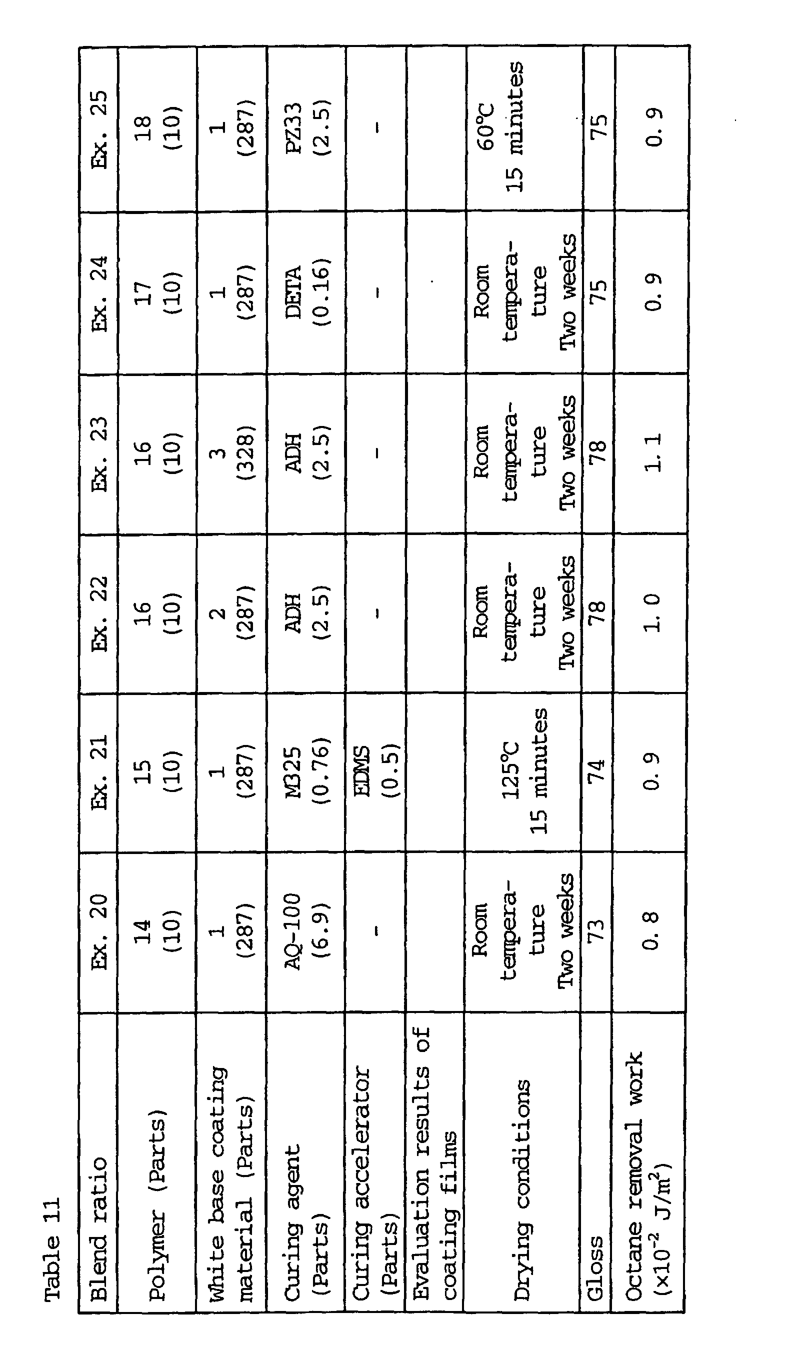

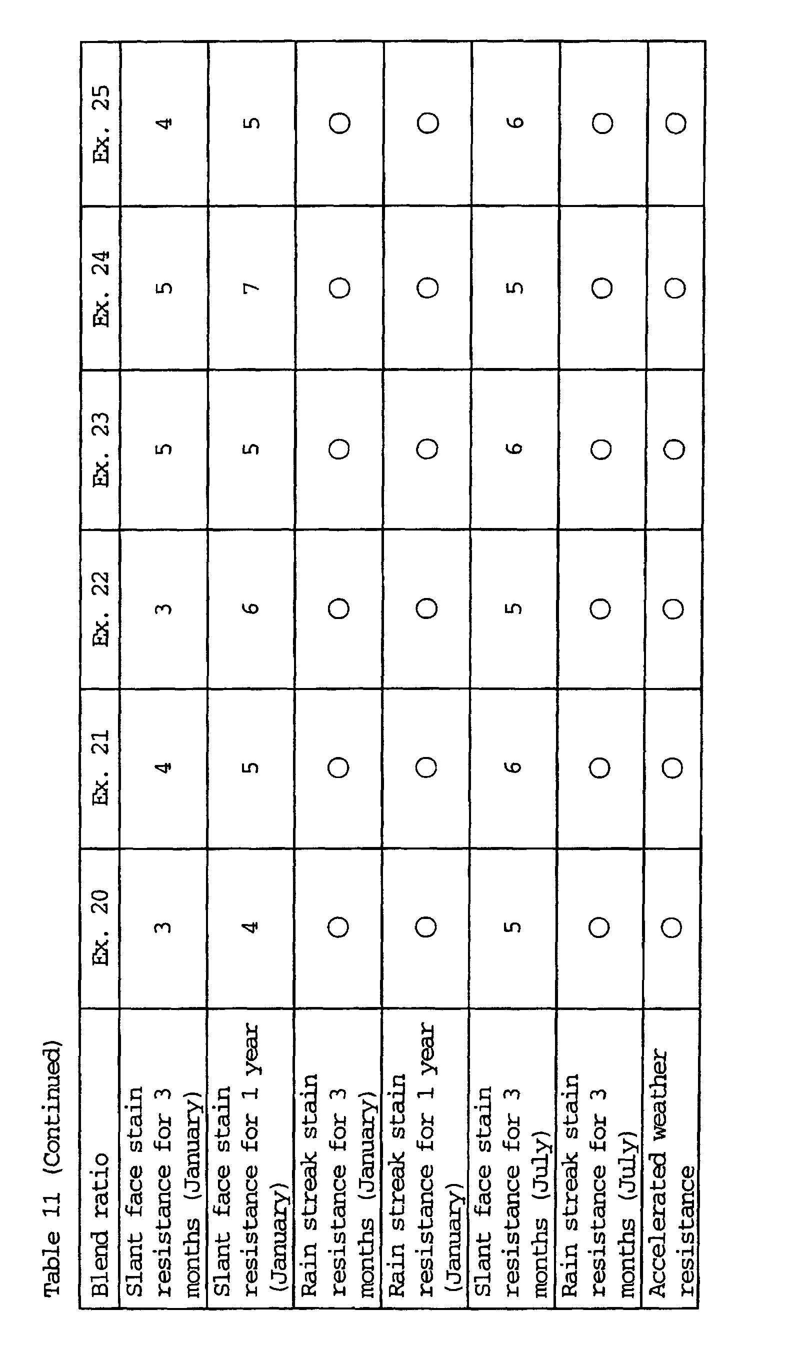

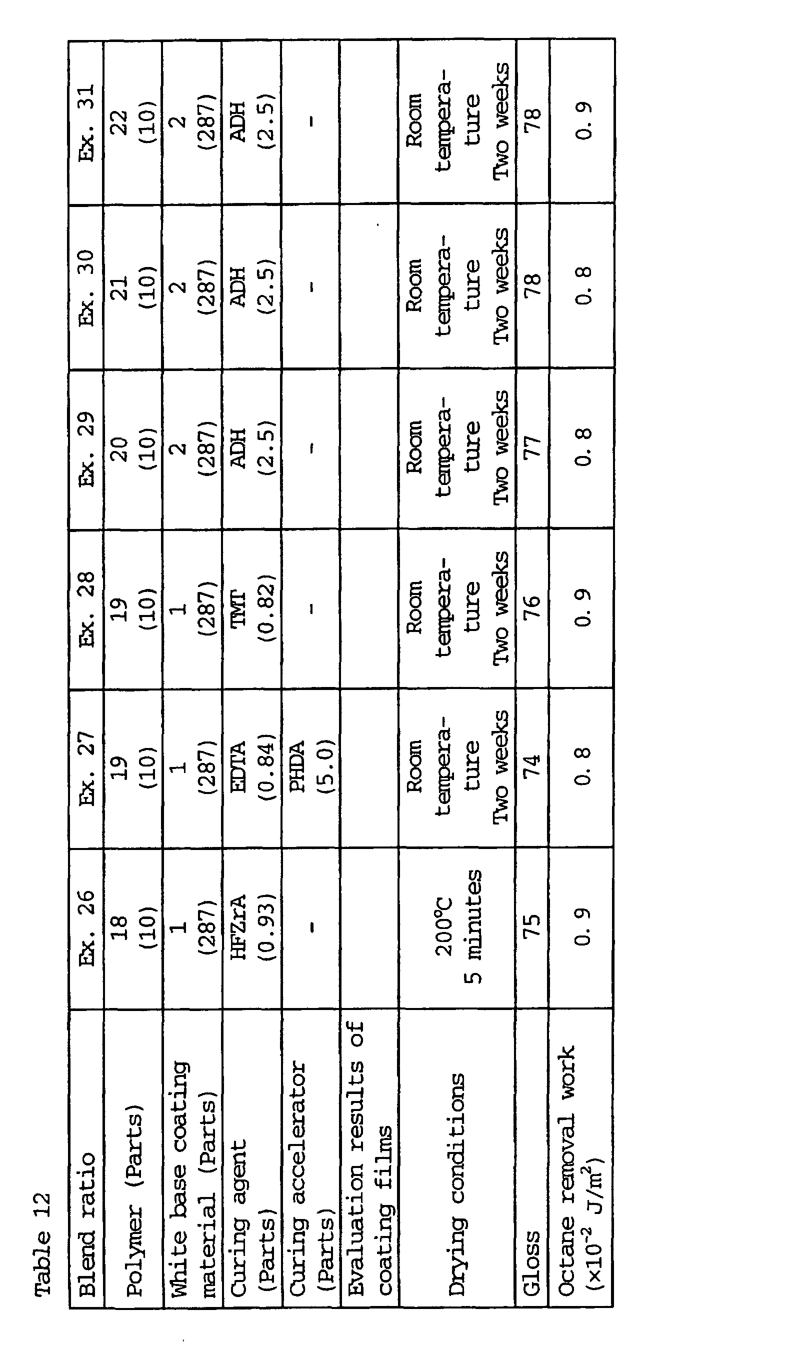

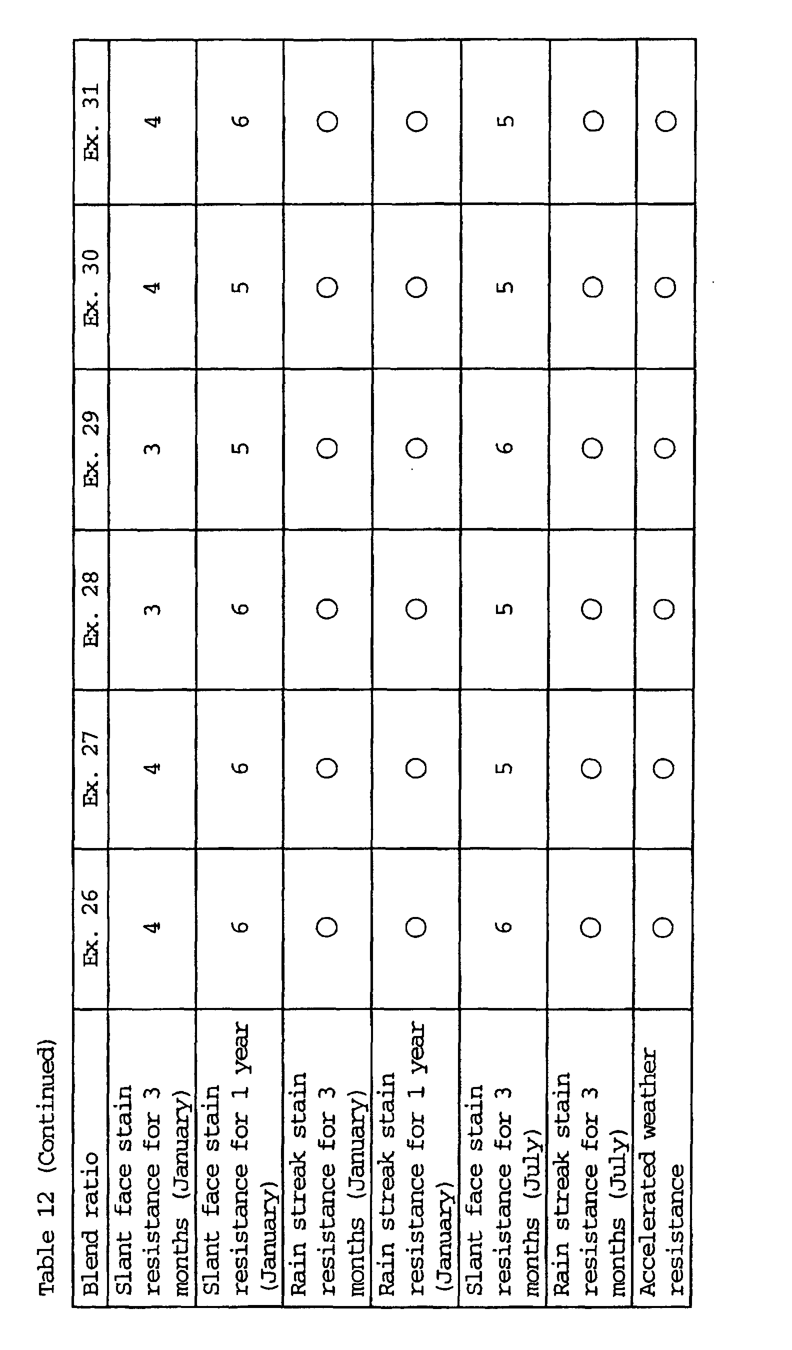

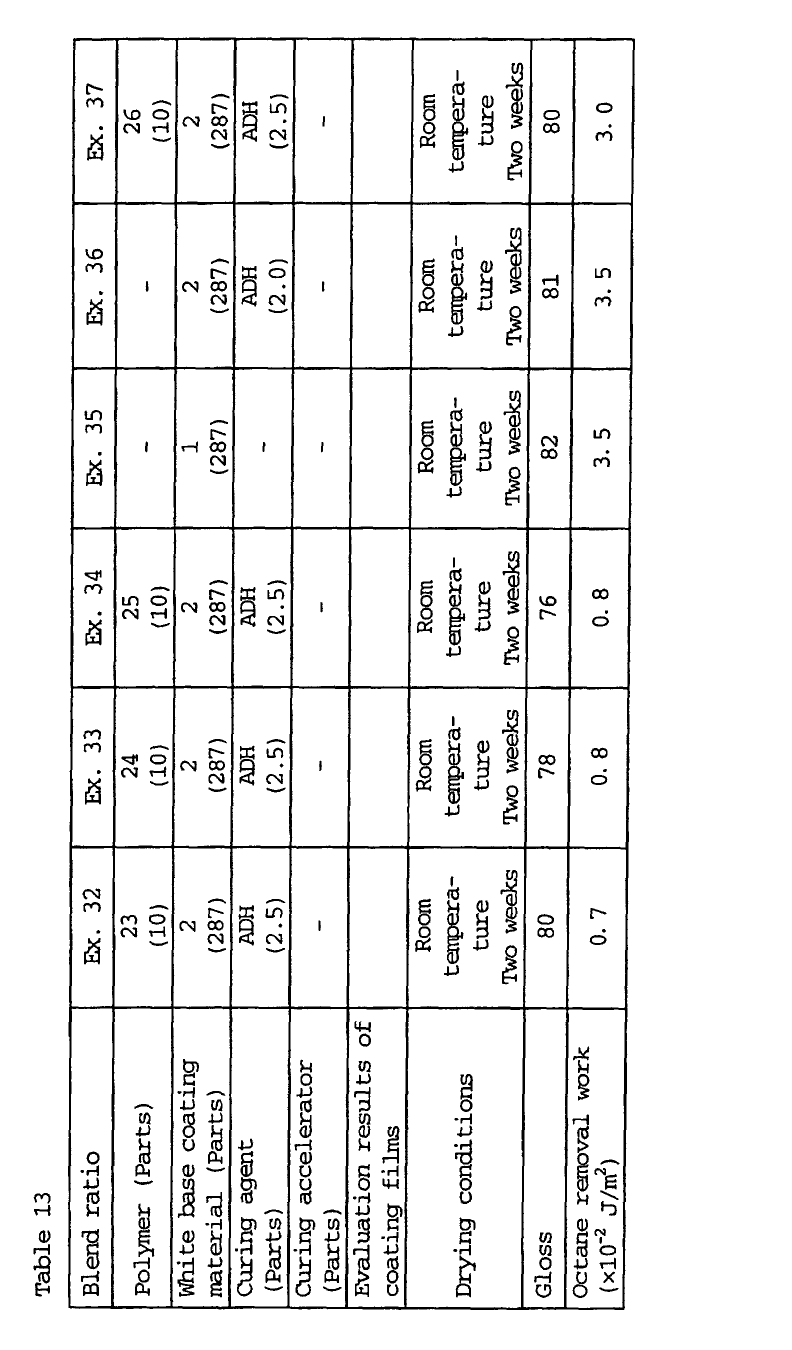

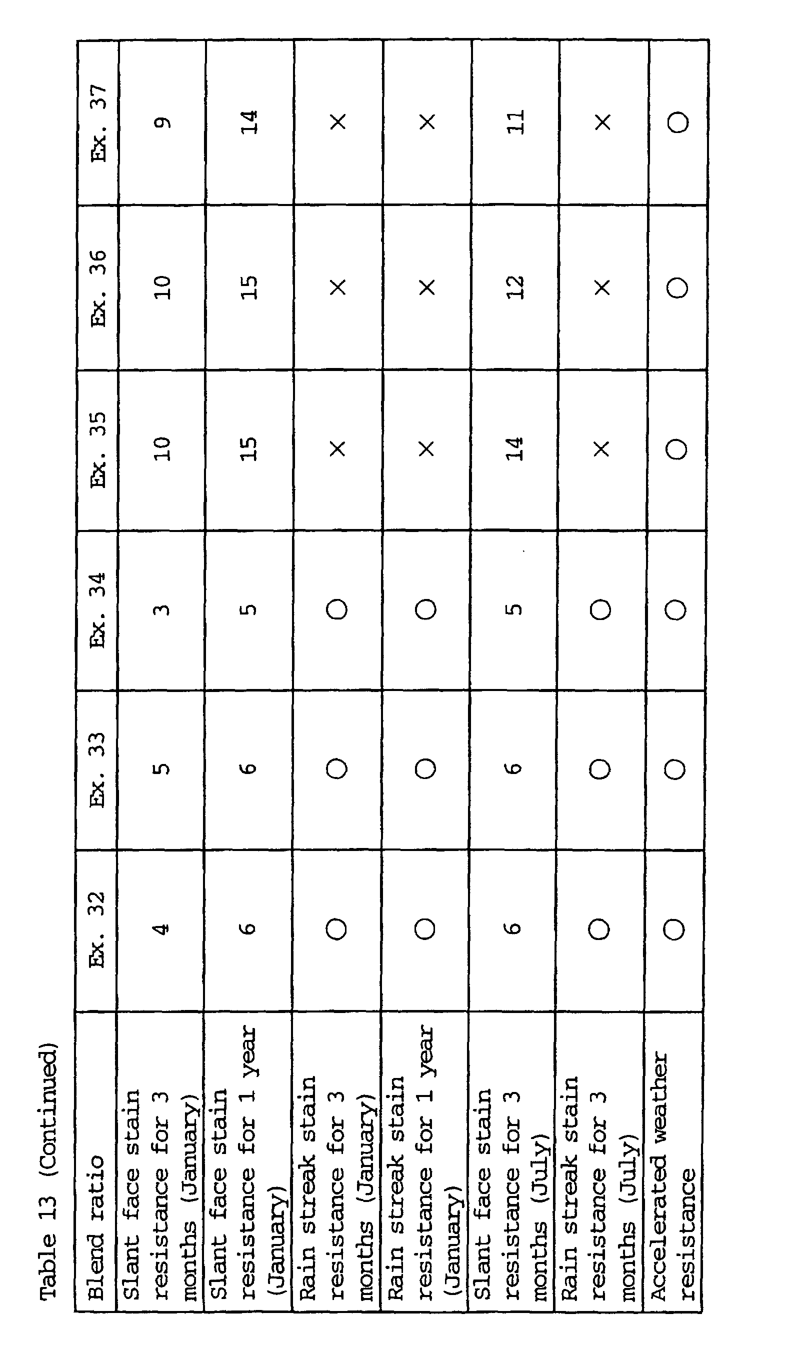

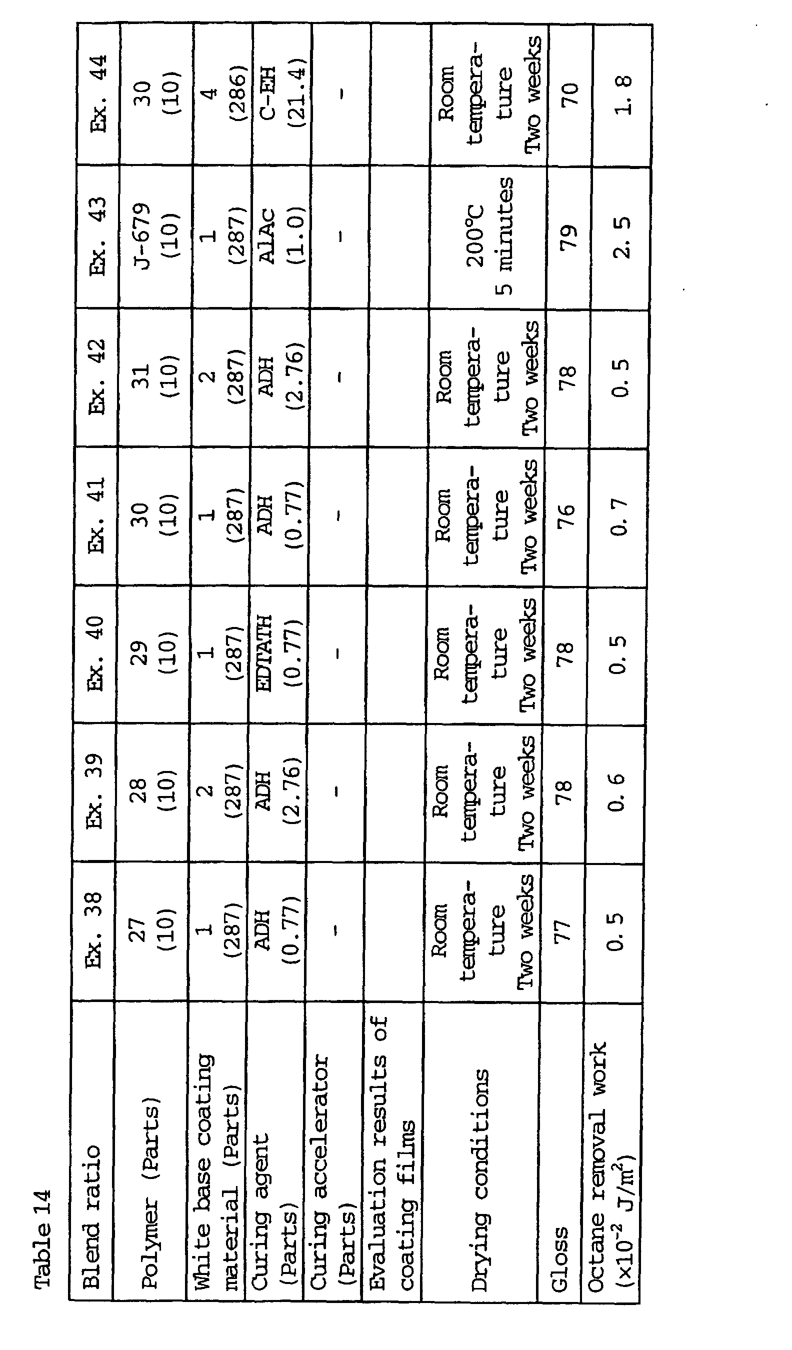

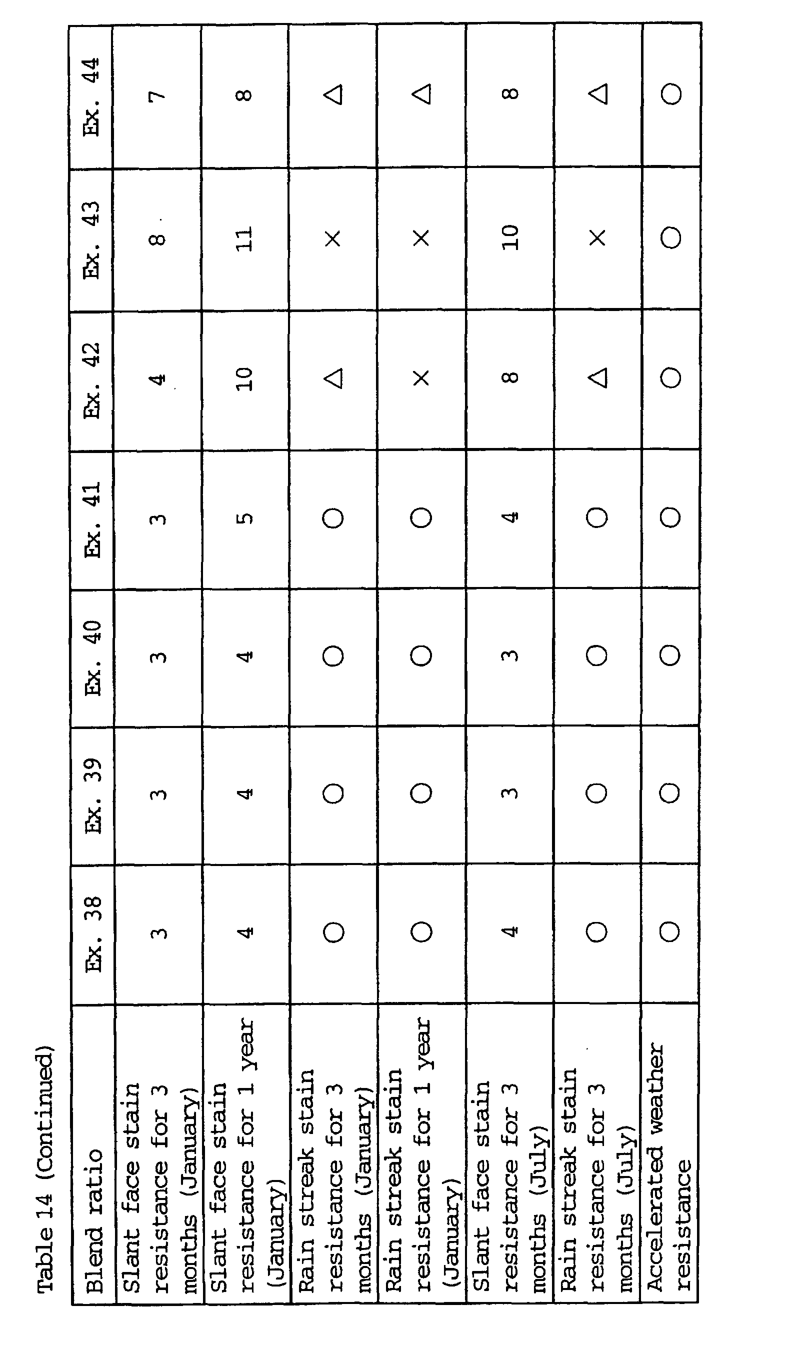

Further, with respect to Examples 3 to 7, 9 to 15, 21 to 24, 26 to 34 and 38 to 41, those stored at 50°C for two weeks were coated and evaluated in the same manner. The respective coated plates showed the performance equivalent to the coated plates coated with the respective aqueous coating material compositions prior to the storage as disclosed in Tables 8 to 14 with respect to the various physical properties such as the gloss, slant face stain resistance, rain streak stain resistance and accelerated weather resistance.

### INDUSTRIAL APPLICABILITY

According to the present invention, it is possible to obtain a coating composition capable of forming a coating film which has a high surface gloss and is excellent in the stain resistance, the rain streak stain resistance, the stain cleaning property, the stain wiping off property and the stain removal property and excellent in the durability thereof and which is excellent in weather resistance. Further, it is possible to obtain a coated article having a coating film having such excellent characteristics.

## Claims

1. A stain-proofing agent comprising a polymer which contains at least one repeating unit (A1) having at least two hydroxyl groups and, if necessary, contains a repeating unit (B1) other than the repeating unit (A1), wherein the content (by mass) of the repeating unit (A1) is more than 10%.

2. A stain-proofing agent comprising a polymer which contains at least two repeating units (A2) having hydroxymethyl groups and, if necessary, contains a repeating unit (B2) other than the repeating units (A2), wherein the content (by mass) of the repeating units (A2) is more than 30%.

3. The stain-proofing agent according to Claim 1 or 2, wherein at least one type of the repeating unit (B1) or at least one type of the repeating unit (B2) is a repeating unit (bl) having a crosslinkable functional group.

4. The stain-proofing agent according to Claim 2 or 3, wherein the hydroxymethyl groups in the repeating units (A2) are bonded to nitrogen atoms.

5. The stain-proofing agent according to Claim 2, 3 or 4, wherein the repeating units (A2) are repeating units obtained from at least one monomer selected from the group consisting of N-hydroxymethylacrylamide, N-hydroxymethylmethacrylamide, N,N-bis(hydroxymethyl)acrylamide and N,N-bis(hydroxymethyl)methacrylamide.

6. The stain-proofing agent according to any one of Claims 1 to 5, wherein the octane removal work calculated from the contact angle of octane in water, of a film formed from the stain-proofing agent, is less than 3.0×10⁻² J/m².

7. A coating composition comprising a coating resin and the stain-proofing agent as defined in any one of Claims 1 to 6.

8. The coating composition according to Claim 7, wherein the coating resin is a fluororesin.

9. The coating composition according to Claim 7 or 8, which further contains a crosslinking agent capable of crosslinking the stain-proofing agent.

10. A coated article having a coating film formed by using the coating composition as defined in Claim 7, 8 or 9.
